(19) Europäisches Patentamt
European Patent Office
Office européen des brevets

(11) EP 3 034 554 B1

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(21) Anmeldenummer: **15195611.7**

(22) Anmeldetag: **20.11.2015**

(51) Int Cl.:
*C08K 13/02* (2006.01)
*C08K 5/5313* (2006.01)
*C08K 5/5317* (2006.01)
*C08K 5/05* (2006.01)
*C08L 77/00* (2006.01)
*C08G 69/00* (2006.01)

(54) **POLYAMIDZUSAMMENSETZUNGEN**

POLYAMIDE COMPOSITIONS

COMPOSITIONS DE POLYAMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2014 EP 14199134**

(43) Veröffentlichungstag der Anmeldung:
**22.06.2016 Patentblatt 2016/25**

(73) Patentinhaber: **LANXESS Deutschland GmbH**
**50569 Köln (DE)**

(72) Erfinder:
- **ENDTNER, Jochen**
  **50679 Köln (DE)**
- **BIENMÜLLER, Matthias**
  **47803 Krefeld (DE)**

(56) Entgegenhaltungen:
**EP-A1- 1 624 015**
**WO-A1-2012/140100**
**WO-A1-2014/135256**
**WO-A2-2013/033287**
**DE-A1-102004 019 716**

- **DAHIYA J B ET AL: "The combined effect of organic phoshphinate/ammonium polyphosphate and pentaerythritol on thermal and fire properties of polyamide 6-clay nanocomposites", POLYMER DEGRADATION AND STABILITY, BARKING, GB, Bd. 97, Nr. 8, 18. Mai 2012 (2012-05-18), Seiten 1458-1465, XP028401441, ISSN: 0141-3910, DOI: 10.1016/J.POLYMDEGRADSTAB.2012.05.012 [gefunden am 2012-05-26]**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Zusammensetzungen auf Basis von Polyamid 6 und/oder Polyamid 66 enthaltend mindestens ein Aluminiumsalz der Phosphonsäure und mindestens Dipentaerythritol oder Tripentaerythritol.

## Stand der Technik

Polyamide sind aufgrund ihrer guten mechanischen Stabilität, ihrer chemischen Beständigkeit und der guten Verarbeitbarkeit gerade auch im Bereich der Elektro- und Elektronikbauteile ein wichtiger thermoplastischer Werkstoff. Allerdings stellen gerade Anwendungen im Elektro- und Elektronikbereich sehr häufig erhöhte Anforderungen an die Flammwidrigkeit, weswegen die dort eingesetzten Polyamide häufig mit Flammschutzmitteln ausgerüstet werden müssen. Die dafür infrage kommenden halogenhaltigen Flammschutzmittel werden dabei in jüngerer Zeit aus technischen Gründen aber aufgrund von Vorbehalten in der Öffentlichkeit zunehmend durch halogenfreie Alternativen zum Beispiel auf Basis von organischen Phosphorverbindungen wie z. B. organisch substituierte Metallphosphinate ersetzt (EP 0 792 912 A2). Dabei werden die organisch substituierten Metallphosphinate häufig in Kombination mit anderen Flammschutzmittelsynergisten, z. B. auf Basis stickstoffhaltiger Flammschutzmittel, oder mit weiteren Hilfsstoffen, wie z. B. Metallboraten, insbesondere Zinkborate, eingesetzt (WO 2006/ 029711 A1) eingesetzt.

Mit der fortschreitenden Miniaturisierung von elektronischen Bauteilen und dem mit der erhöhten Leistungsdichte verbundenen Temperaturanstieg treten aber auch Fragen der mechanischen Langzeitstabilität bei erhöhten Dauergebrauchstemperaturen immer mehr in den Vordergrund, zumal gebräuchliche Thermostabilisatoren auf Basis von Kupfersalzen (US-A 2705227) aufgrund von Wechselwirkungen der Salze mit metallischen Kontakten im Elektro- und Elektronikbereich häufig nicht einsetzbar sind.

US 2013-0217814 A1 lehrt daher eine Polyamidzusammensetzung enthaltend Verstärkungsstoffe und mindestens ein halogenfreies phosphorhaltiges Flammschutzsystem auf Basis von Metallphosphinaten sowie eine Kombination aus Böhmit und mindestens einem mehrwertigen Alkohol mit mehr als zwei Hydroxy-Gruppen und einem durchschnittlichen Molekulargewicht (Mn) von circa 2000 oder weniger zur Verbesserung der mechanischen Eigenschaften nach Temperaturlagerung. Böhmit wird in US 2013-0217814 A1 als Alternative zu Melaminpolyphosphat eingesetzt. Ein Hauptnachteil dieser flammgeschützten Zusammensetzungen gemäß US 2013-0217814 A1 ist allerdings der negative Effekt des Böhmits auf die mechanischen Ausgangseigenschaften. Kritisch zu erwähnen ist ferner der in den Beispielen genannte Einsatz von Zinkborat, der aufgrund seiner wassergefährdenden Kennzeichnung heutzutage nach Möglichkeit zu vermeiden ist.

Ferner sind als Stand der Technik im Zusammenhang mit der vorliegenden Erfindung zu berücksichtigen:
WO 2014/135256 A1, die flammhemmende Polyamid Zusammensatzungen auf Basis eines Dialkylphosphinsäuresalzes und/oder Diphosphinsäuresalzes, eines Salzes der phosphorigen Säure und eines Füll- und Verstärkungsstoffs offenbart;
WO 2013/033287 A2, die thermoplastische Zusammensetzungen aus Polyamid und einem polyhydrischem Alkohol beschreibt;
WO2012/140100 A1, die die Verwendung eines polyhydrischen Alkohols mit wenigstens drei Hydroxylgruppen zur Thermostabilisierung und Lichtstabilisierung von Polyamiden beansprucht;
EP 1624015 A1, betreffend flammgeschützte Polymerformmassen mit nanoteiligem, phosphorhaltigem Flammschutzmittel auf Basis mindestens eines Phosphinsäuresalzes und/oder eine Diphosphinsalzes;
DE 10 2004 019716 A1, offenbarend Flammschutzmittelzusammensetzungen enthaltend mindestens ein Salz einer Phosphinsäure, einer Diphosphinsäure und/oder deren Polymere und mindestens eine Polyhydroxyverbindung; und
J.B. Dahiya et. al., Polymer Degredation and Stability, Barking, GB, Bd.97, Nr.8,2012-05-18, Seiten 1458 - 1465, "The combined effect of organic phosphinate/ammonium polyphosphate and pentaerythritol on thermal and fire properties of polyamide 6-clay nanocomposites".

Aufgabe der vorliegenden Erfindung war es daher, halogenfreie flammgeschützte Polyamidzusammensetzungen mit erhöhter Temperaturstabilität bereitzustellen, bei dem die Systeme zur Thermostabilisierung möglichst keinen negativen Effekt auf die mechanischen Ausgangseigenschaften haben, zudem frei von Kupferhalogeniden sind und dabei nach Möglichkeit auch keinen Einsatz von Zinkboraten erfordern.

Es wurde nun überraschend gefunden, dass Zusammensetzungen und daraus herzustellende Erzeugnisse auf Basis von PA 6 oder PA 66 enthaltend mindestens ein Aluminiumsalz der Phosphonsäure und mindestens einen mehrwertigen Alkohol in Kombination mit organischen Metallphosphinaten sowohl bei Temperaturen unterhalb des Schmelzpunktes der Zusammensetzung als auch bei Temperaturen oberhalb des Schmelzpunktes der Zusammensetzung eine deutlich verbesserte Temperaturstabilität aufweisen, ohne dass dabei die Flammwidrigkeit in der UL94-Prüfung nach der Methode UL94V oder die mechanischen Ausgangseigenschaften gemessen an der Bruchspannung nach ISO527-1,-2 oder der Schlagzähigkeit gemessen nach Charpy (ISO179-1eU) negativ beeinträchtigt werden.

Als Maß für die Temperaturstabilität unterhalb des Schmelzpunktes gilt dabei der prozentuale Erhalt der Bruchspannung nach Heißluftalterung für 45 Tage (1080 Stunden) bei 200°C. Bei 100% Erhalt wäre die Bruchspannung nach

Lagerung dann identisch mit der Bruchspannung zu Beginn der Lagerung.

Die Bewertung der Temperaturstabilität oberhalb des Schmelzpunktes wird mit einem Prüfverfahren in Anlehnung an die MVR-Prüfung nach ISO1133-1 bei einer Temperatur von 270°C und einem Auflagegewicht von 5kg durchgeführt. Als Maß für die Temperaturstabilität gilt dabei der Quotient aus dem MVR-Wert nach 20 min Verweilzeit und dem MVR-Wert nach 5 min Verweilzeit. Ein Quotient von 1 bedeutet, dass die Schmelzviskosität nach 20 min gegenüber dem Wert von 5 min unverändert ist. Je höher der Zahlenwert, desto größer ist die Abnahme der Schmelzviskosität und damit der thermische Abbau der zu untersuchenden Zusammensetzung.

**Erfindungsgegenstand**

Gegenstand der Erfindung sind somit Zusammensetzungen und daraus herzustellende Erzeugnisse enthaltend

A) Polyamid 6 und/oder Polyamid 66,

B) mindestens ein Aluminiumsalz der Phosphonsäure,

C) mindestens einen mehrwertigen Alkohol mit mindestens 3 Alkoholgruppen und einem Molekulargewicht oberhalb von 200 g/mol,

D) ein oder mehrere organische Phosphinsäuresalze der Formel (I) und/oder ein oder mehrere Diphosphinsäuresalze der Formel (II) und/oder deren Polymere,

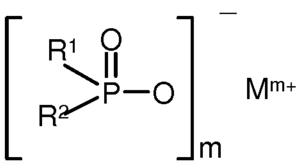 (I)

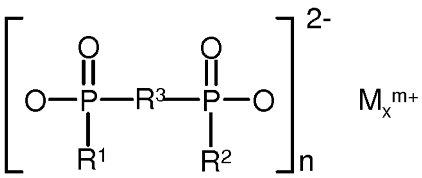 (II)

worin

| | |
|---|---|
| $R^1$, $R^2$ | gleich oder verschieden sind und für ein lineares oder verzweigtes $C_1$-$C_6$-Alkyl, und/oder für $C_6$-$C_{14}$-Aryl stehen, |
| $R^3$ | für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht, |
| M | für Aluminium, Zink oder Titan steht, |
| m | für eine ganze Zahl von 1 bis 4 steht; |
| n | für eine ganze Zahl von 1 bis 3 steht, |
| x | für 1 und 2 steht, |

wobei n, x und m in Formel (II) gleichzeitig nur solche ganzen Zahlen annehmen können, dass das Diphosphinsäuresalz der Formel (II) als Ganzes ungeladen ist,
und als Komponente C) Dipentaerythritol oder Tripentaerythritol eingesetzt werden, und auf 100 Massenanteile der Komponente A), 1 bis 40 Massenanteile der Komponente B), 0,1 bis 15 Massenanteile der Komponente C) und 5 bis 150 Massenanteile der Komponente D) eingesetzt werden.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Alle Normen im Rahmen der vorliegenden Beschreibung gelten in der zum Anmeldetag dieser Erfindung gültigen Fassung.

Die Zubereitung der erfindungsgemäßen Zusammensetzungen für eine weitere Nutzung erfolgt durch Mischen der als Edukte einzusetzenden Komponenten A) bis D) in wenigstens einem Mischwerkzeug. Hierdurch werden als Zwischenprodukte, auf den erfindungsgemäßen Zusammensetzungen basierende, Formmassen erhalten. Diese Formmassen können entweder ausschließlich aus den Komponenten A) bis D) bestehen, oder aber zusätzlich zu den Komponenten A) bis D) noch weitere Komponenten enthalten. In diesem Fall sind die Komponenten A) bis D) im Rahmen der angegebenen Mengenbereiche so zu variieren, dass die Summe aller Gewichtsprozente stets 100 ergibt.

**Bevorzugte Ausführungsformen der Erfindung**

Vorzugsweise betrifft die vorliegende Erfindung Zusammensetzungen worin der Massenanteil der Komponente B) bezogen auf die Summe der Massenanteile von Komponente B) und Komponente D) größer als 10%, bevorzugt größer als 15%, besonders bevorzugt größer als 20% ist. Der Massenanteil ist gemäß DIN 1310 definiert. In bevorzugter Ausführung betrifft die Erfindung Zusammensetzungen und daraus herzustellende Erzeugnisse enthaltend

A) 25 bis 95 Gew.-%, bevorzugt 32 bis 90 Gew.-%, besonders bevorzugt 35 bis 85,5 Gew.-% Polyamid 6 und/oder Polyamid 66,

B) 1 bis 15 Gew.-%, bevorzugt 3 bis 10 Gew.-%, besonders bevorzugt 4 bis 8 Gew.-% mindestens eines Aluminiumsalzes der Phosphonsäure

C) 0,1 bis 5 Gew.-%, bevorzugt 0,3 bis 3 Gew.-%, besonders bevorzugt 0,5 bis 2 Gew.-% mindestens eines mehrwertigen Alkohols mit mindestens 3 Alkoholgruppen und einem Molekulargewicht oberhalb von 200 g/mol, wobei Dipentaerythritol oder Tripentaerythritol eingesetzt werden,

D) 3,9 bis 55 Gew.-%, bevorzugt 6,7 bis 55 Gew.-%, besonders bevorzugt 10 bis 55 Gew.-% eines oder mehrerer organischer Phosphinsäuresalze der Formel (I) und/oder eines oder mehrerer Diphosphinsäuresalze der Formel (II) und/oder deren Polymere,

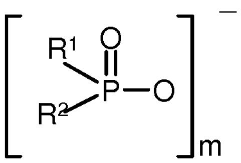 $M^{m+}$ (I) 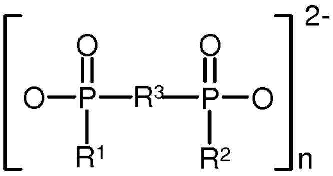 $M_x^{m+}$ (II)

worin

- $R^1$, $R^2$ gleich oder verschieden sind und für ein lineares oder verzweigtes $C_1$-$C_6$-Alkyl, und/oder für $C_6$-$C_{14}$-Aryl stehen,
- $R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,
- M für Aluminium, Zink oder Titan steht,
- m für eine ganze Zahl von 1 bis 4 steht;
- n für eine ganze Zahl von 1 bis 3 steht,
- x für 1 und 2 steht,

wobei n, x und m in Formel (II) gleichzeitig nur solche ganzen Zahlen annehmen können, dass das Diphosphinsäuresalz der Formel (II) als Ganzes ungeladen ist und mit der Maßgabe, dass die Summe aller Gewichtsprozente stets 100 ergibt.

In besonders bevorzugter Ausführung betrifft die Erfindung Zusammensetzungen und daraus herzustellende Erzeugnisse enthaltend

A) 25 bis 95 Gew.-%, bevorzugt 32 bis 90 Gew.-%, besonders bevorzugt 35 bis 85,5 Gew.-% Polyamid 6 und/oder Polyamid 66,
B) 1 bis 15 Gew.-%, bevorzugt 3 bis 10 Gew.-%, besonders bevorzugt 4 bis 8 Gew.-% mindestens eines Aluminiumsalzes der Phosphonsäure
C) 0,1 bis 5 Gew.-%, bevorzugt 0,3 bis 3 Gew.-%, besonders bevorzugt 0,5 bis 2 Gew.-% mindestens eines mehrwertigen Alkohols mit mindestens 3 Alkoholgruppen und einem Molekulargewicht oberhalb von 200 g/mol und unterhalb von 600 g/ mol, wobei Dipentaerythritol oder Tripentaerythritol eingesetzt werden,
D) 3,9 bis 55 Gew.-%, bevorzugt 6,7 bis 55 Gew.-%, besonders bevorzugt 10 bis 55 Gew.-% eines oder mehrerer organischer Phosphinsäuresalze der Formel (I) und/oder eines oder mehrerer Diphosphinsäuresalze der Formel (II) und/oder deren Polymere,

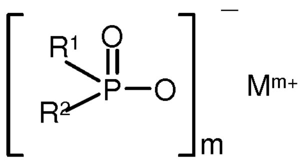 (I) 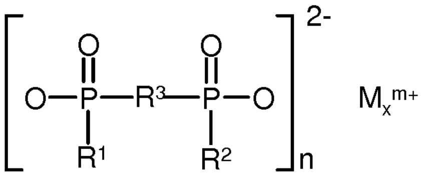 (II)

worin

$R^1$, $R^2$ gleich oder verschieden sind und für ein lineares oder verzweigtes $C_1$-$C_6$-Alkyl, und/oder für $C_6$-$C_{14}$-Aryl stehen,

$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,

M für Aluminium, Zink oder Titan steht,

m für eine ganze Zahl von 1 bis 4 steht;

n für eine ganze Zahl von 1 bis 3 steht,

x für 1 und 2 steht,

wobei n, x und m in Formel (II) gleichzeitig nur solche ganzen Zahlen annehmen können, dass das Diphosphinsäuresalz der Formel (II) als Ganzes ungeladen ist und mit der Maßgabe, dass die Summe aller Gewichtsprozente stets 100 ergibt.

In einer weiteren bevorzugten Ausführungsform betrifft die Erfindung Zusammensetzungen und daraus herzustellende Erzeugnisse enthaltend

A) 25 bis 95 Gew.-%, bevorzugt 32 bis 90 Gew.-%, besonders bevorzugt 35 bis 85,5 Gew.-% Polyamid 6 und/oder Polyamid 66,

B) 1 bis 15 Gew.-%, bevorzugt 3 bis 10 Gew.-%, besonders bevorzugt 4 bis 8 Gew.-% mindestens eines Aluminiumsalzes der Phosphonsäure

C) 0,1 bis 5 Gew.-%, bevorzugt 0,3 bis 3 Gew.-%, besonders bevorzugt 0,5 bis 2 Gew.-% mindestens eines mehrwertigen Alkohols mit mindestens 3 Alkoholgruppen und einem Molekulargewicht oberhalb von 200 g/mol und unterhalb von 600 g/ mol, wobei Dipentaerythritol oder Tripentaerythritol eingesetzt werden,

D) 3,9 bis 55 Gew.-%, bevorzugt 6,7 bis 55 Gew.-%, besonders bevorzugt 10 bis 55 Gew.-% eines oder mehrerer organischer Phosphinsäuresalze der Formel (I) und/oder eines oder mehrerer Diphosphinsäuresalze der Formel (II) und/oder deren Polymere,

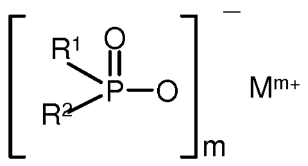 (I) 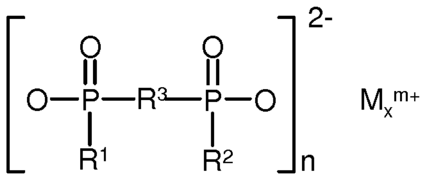 (II)

worin

$R^1$, $R^2$ gleich oder verschieden sind und für ein lineares oder verzweigtes $C_1$-$C_6$-Alkyl, und/oder für $C_6$-$C_{14}$-Aryl stehen,

$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,

M für Aluminium, Zink oder Titan steht,

m für eine ganze Zahl von 1 bis 4 steht;

n für eine ganze Zahl von 1 bis 3 steht,

x für 1 und 2 steht,

wobei n, x und m in Formel (II) gleichzeitig nur solche ganzen Zahlen annehmen können, dass das Diphosphinsäuresalz

der Formel (II) als Ganzes ungeladen ist und mit der Maßgabe, dass der Massenanteil an Komponente B) bezogen auf die Summe der Massenanteile von Komponente B) und Komponente D) größer als 10%, bevorzugt größer als 15%, besonders bevorzugt größer als 20% ist und dass die Summe aller Gewichtsprozente aus A), B), C) und D) stets 100 ergibt.

In einer bevorzugten Ausführungsform enthalten die Zusammensetzungen zusätzlich zu den Komponenten A), B), C) und D) noch E) wenigstens einen Thermostabilisator aus der Gruppe der **sterisch gehinderten Phenole,** bevorzugt zu 0,01 bis 3 Gew.-%, besonders bevorzugt zu 0,1 bis 2 Gew.-%, ganz besonders bevorzugt zu 0,3 bis 1 Gew.-%, jeweils bezogen auf die Gesamtzusammensetzung, wobei wenigstens eine der übrigen Komponenten soweit reduziert wird, dass die Summe aller Gewichtsprozente stets 100 ergibt.

In einer weiteren bevorzugten Ausführungsform enthalten die Zusammensetzungen zusätzlich zu den Komponenten A) bis E) oder anstelle von E) noch F) **Glasfasern,** bevorzugt zu 5 bis 60 Gew.-%, besonders bevorzugt zu 10 bis 50 Gew.-%, ganz besonders bevorzugt zu 15 bis 45 Gew.-%, jeweils bezogen auf die Gesamtzusammensetzung, wobei wenigstens eine der übrigen Komponenten soweit reduziert wird, dass die Summe aller Gewichtsprozente stets 100 ergibt.

In einer weiteren bevorzugten Ausführungsform enthalten die Zusammensetzungen zusätzlich zu den Komponenten A) bis F) oder anstelle von E) und/oder F) noch G) wenigstens einen von der Komponente E) **verschiedenen Füllstoff oder Verstärkungsstoff,** bevorzugt zu 0,5 bis 50 Gew.-%, besonders bevorzugt zu 1 bis 30 Gew.-%, ganz besonders bevorzugt zu 2 bis 15 Gew.-%, insbesondere bevorzugt zu 2 bis 6 Gew.-%, jeweils bezogen auf die Gesamtzusammensetzung, wobei wenigstens eine der übrigen Komponenten soweit reduziert wird, dass die Summe aller Gewichtsprozente stets 100 ergibt.

In einer weiteren bevorzugten Ausführungsform enthalten die Zusammensetzungen zusätzlich zu den Komponenten A) bis G) oder anstelle von E) und/oder F) und/oder G) noch H) wenigstens ein weiteres von den Komponenten B) bis E) unterschiedliches Additiv, bevorzugt zu 0,01 bis 20 Gew.-%, besonders bevorzugt zu 0,05 bis 10 Gew.-%, ganz besonders bevorzugt zu 0,1 bis 5 Gew.-%, jeweils bezogen auf die Gesamtzusammensetzung, wobei wenigstens eine der übrigen Komponenten soweit reduziert wird, dass die Summe aller Gewichtsprozente stets 100 ergibt.

In alternativer Ausführungsform betrifft die Erfindung Zusammensetzungen und daraus herzustellende Erzeugnisse enthaltend

100 Massenanteile der **Komponente A),**

1 bis 40 Massenanteile, bevorzugt 6 bis 25 Massenanteile, besonders bevorzugt 8 bis 18 Massenanteile der **Komponente B),**
0,1 bis 15 Massenanteile, bevorzugt 0,5 bis 10 Massenanteile, besonders bevorzugt 1 bis 7 Massenanteile der **Komponente** C),
5 bis 150 Massenanteile, bevorzugt 10 bis 100 Massenanteile, besonders bevorzugt 15 bis 60 Massenanteile der **Komponente D).**

In einer bevorzugten alternativen Ausführungsform enthalten die Zusammensetzungen zusätzlich zu den Komponenten A), B), C) und D) noch 0,01 bis 6 Massenanteileteile, bevorzugt 0,1 bis 4 Massenanteile, besonders bevorzugt 0,5 bis 2 Massenanteile der Komponente E).

In einer weiteren bevorzugten alternativen Ausführungsform enthalten die Zusammensetzungen zusätzlich zu den Komponenten A) bis E) oder anstelle von E) noch 5 bis 300 Massenanteile, bevorzugt 15 bis 200 Massenanteile, besonders bevorzugt 30 bis 150 Massenanteile der Komponente F).

In einer weiteren bevorzugten alternativen Ausführungsform enthalten die Zusammensetzungen zusätzlich zu den Komponenten A) bis F) oder anstelle von E) und/oder F) noch 0,1 bis 250 Massenanteile, bevorzugt 1 bis 100 Massenanteile, besonders bevorzugt 5 bis 80 Massenanteile, insbesondere besonders bevorzugt 6 bis 30 Massenanteile der Komponente G).

In einer weiteren bevorzugten alternativen Ausführungsform enthalten die Zusammensetzungen zusätzlich zu den Komponenten A) bis G) oder anstelle von E) und/oder F) und/oder G) noch 0,01 bis 60 Massenanteile, bevorzugt 0,1 bis 30 Massenanteile, besonders bevorzugt 0,2 bis 15 Massenanteile der Komponente H).

Multipliziert man den Massenanteil mit 100 %, so lässt er sich auch in Form einer prozentualen Größe angeben; hierfür wird im Rahmen der vorliegenden Erfindung Gewichtsprozent (Gew.-%) verwendet.

Komponente A)

Als Komponente A) enthalten die Zusammensetzungen PA 6 [CAS Nr. 25038-54-4] oder PA 66 [CAS Nr. 32131-17-2]. Copolyamide auf Basis von PA 6 und/oder PA 66 werden vom Gegenstand der vorliegenden Erfindung mit umfasst.

Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der

Dicarbonsäure angeben. Wird nur eine Zahl angegeben, wie im Falle des PA6, so bedeutet dies, dass von einer α,ω-Aminocarbonsäure bzw. von dem davon abgeleiteten Lactam, im Falle des PA 6 also dem ε-Caprolactam, ausgegangen worden ist; im Übrigen sei verwiesen auf H. Domininghaus, Die Kunststoffe und ihre Eigenschaften, Seiten 272 ff., VDI-Verlag, 1976. Bevorzugt besitzt das als Komponente A) einzusetzende Polyamid 6 oder das Polyamid 66 eine Viskositätszahl bestimmt in einer 0,5 gew.-%igen Lösung in 96 gew.-%iger Schwefelsäure bei 25 °C gemäß ISO 307 im Bereich von 80 bis 180 ml/g.

Besonders bevorzugt besitzt das als Komponente A) einzusetzende Polyamid 6 nach der genannten Norm und nach dem oben genannten Verfahren eine Viskositätszahl im Bereich von 85 bis 160 ml/g, ganz besonders bevorzugt eine Viskositätszahl im Bereich von 90 bis 140 ml/g.

Das als Komponente A) einzusetzende Polyamid 66 besitzt nach dem oben genannten Verfahren besonders bevorzugt eine Viskositätszahl im Bereich von 100 bis 170 ml/g, ganz besonders bevorzugt eine Viskositätszahl im Bereich von 110 bis 160 ml/g.

Aus Viskositätsmessungen in Lösung bestimmt man den K-Wert, ein Molekülparameter mit dem die Fließeigenschaften von Kunststoffen gekennzeichnet werden können. Vereinfacht gilt: [η] = 2,303 × (75 $k^2$ + k) mit K-Wert = 1000 k und [η] = Staudinger Viskosität. Die Viskositätszahl J in $cm^3/g$ kann daraus ohne komplizierte Umrechnung nach DIN 53726 ermittelt werden.

$$J = \left(\frac{\eta}{\eta_0} - 1\right) \cdot \frac{1}{c}$$

Siehe: http://www.mhaeberl.de/KUT/3Kunststoffschmelze.htm. Für die Praxis existieren Umrechnungstabellen K-Wert in Viskositätszahl J.

Unter thermoplastischen Polyamiden werden in Anlehnung an Hans Domininghaus in "Die Kunststoffe und ihre Eigenschaften", 5. Auflage (1998), S. 14, Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind.

Die erfindungsgemäß bevorzugten Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen ausgerüstet werden. Geeignet sind auch Blends mit Anteilen von anderen Polymeren, bevorzugt von Polyethylen, Polypropylen, Acrylnitril-Butadien-Styrol-Copolymerisat (ABS), wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. Im Rahmen der vorliegenden Erfindung wird auch die hydrolytische Polymerisation von Lactamen als Polykondensation verstanden.

Bei den als Komponente A) einzusetzenden Polyamiden PA 6 und PA 66 handelt es sich um teilkristalline Polyamide. Teilkristalline Polyamide besitzen gemäß DE 10 2011 084 519 A1 eine Schmelzenthalpie im Bereich von 4 bis 25 J/g, gemessen mit der DSC-Methode gemäß ISO 11357 beim 2. Aufheizen und Integration des Schmelzpeaks. Im Gegensatz dazu besitzen amorphe Polyamide eine Schmelzenthalpie von weniger als 4 J/g, gemessen mit der DSC-Methode gemäß ISO 11357 beim 2. Aufheizen und Integration des Schmelzpeaks.

Das als Komponente A) einzusetzende Polyamid 6 ist erhältlich aus ε-Caprolactam. Das als Komponente A) einzusetzende Polyamid 66 ist erhältlich aus Hexamethylendiamin und Adipinsäure.

Bevorzugt sind weiterhin die meisten auf PA 6, PA 66 bzw. auf deren Copolyamiden basierende Compounds, bei denen auf eine Polyamidgruppe in der Polymerkette 3 bis 11 Methylengruppen, insbesondere ganz besonders bevorzugt 4 bis 6 Methylengruppen kommen.

Polyamid 6 ist beispielsweise als Durethan® B26 bei der Lanxess Deutschland GmbH, Köln, und Polyamid 66 als Ultramid® A27E bei der BASF SE, Ludwigshafen, erhältlich.

**Komponente B)**

Als Komponente B) enthalten die Zusammensetzungen mindestens ein Aluminiumsalz der Phosphonsäure.

Unter Phosphonsäure wird dabei gemäß Wikipedia der Stoff mit der Summenformel $H_3PO_3$ [CAS-Nr. 13598-36-2] (http://de.wikipedia.org/wiki/Phosphons%C3%A4ure) verstanden. Die Salze der Phosphonsäure werden Phosphonate genannt. Die Phosphonsäure kann in zwei tautomeren Formen vorliegen, von denen eine ein freies Elektronenpaar am Phosphor-Atom hat und die andere einen doppelt gebundenen Sauerstoff zum Phosphor (P=O) aufweist. Das Tautomeriegleichgewicht liegt dabei ganz auf der Seite der Form mit dem doppelt gebundenen Sauerstoff. Gemäß A. F. Holleman, E. Wiberg: Lehrbuch der Anorganischen Chemie. 101. Auflage. Walter de Gruyter, Berlin/New York 1995, ISBN 3-11-012641-9, S. 764 sollen die Begriffe "Phosphorige Säure" bzw. "Phosphite" nur für die tautomeren Spezies mit einem freien Elektronenpaar am Phosphor verwendet werden. Früher wurden die Begriffe "Phosphorige Säure" bzw. "Phosphite" allerdings auch für die tautomeren Formen mit doppelt gebundenem Sauerstoff zum Phosphor verwendet, so dass in der vorliegenden Erfindung die Begriffe Phosphonsäure und Phosphorige Säure bzw. Phosphonate und Phosphite synonym zueinander gebraucht werden.

Bevorzugt wird als Komponente B) mindestens ein Aluminiumsalz der Phosphonsäure ausgewählt aus der Gruppe

primäres Aluminiumphosphonat [$Al(H_2PO_3)_3$],
basisches Aluminiumphosphonat [$Al(OH)H_2PO_3)_2 \cdot 2H_2O$],

$$Al_2(HPO_3)_3 \cdot \times\ Al_2O_3 \cdot n\ H_2O$$

mit x im Bereich von 2,27 bis 1 und n im Bereich von 0 bis 4,

$$Al_2(HPO_3)_3 \cdot (H_2O)_q \qquad \text{(III)}$$

mit q im Bereich von 0 bis 4, insbesondere Aluminiumphosphonattetrahydrat [$Al_2(HPO_3)_3 \cdot 4H_2O$] oder sekundäres Aluminiumphosphonat [$Al_2(HPO_3)_3$],

$$Al_2M_z(HPO_3)_y(OH)_v \cdot (H_2O)_w \qquad \text{(IV)}$$

worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und

$$Al_2(HPO_3)_u(H_2PO_3)_t \cdot (H_2O)_s \qquad \text{(V)}$$

worin u im Bereich von 2 bis 2,99, t im Bereich von 2 bis 0,01 und s im Bereich von 0 bis 4 liegt,
wobei in Formeln (IV) z, y und v sowie in Formel (V) u und t nur solche Zahlen annehmen können, dass das entsprechende Aluminiumsalz der Phosphonsäure als Ganzes ungeladen ist.

Bevorzugte Alkalimetalle in Formel (IV) sind Natrium und Kalium.

Die beschriebenen Aluminiumsalze der Phosphonsäure können dabei einzeln oder im Gemisch eingesetzt werden.

Besonders bevorzugte Aluminiumsalze der Phosphonsäure werden ausgewählt aus der Gruppe

primäres Aluminiumphosphonat [$Al(H_2PO_3)_3$],
sekundäres Aluminiumphosphonat [$Al_2(HPO_3)_3$],
basisches Aluminiumphosphonat [$Al(OH)H_2PO_3)_2 \cdot 2H_2O$],
Aluminiumphosphonattetrahydrat [$Al_2(HPO_3)_3 \cdot 4H_2O$] und

$$Al_2(HPO_3)_3 \cdot x\ Al_2O_3 \cdot n\ H_2O$$

mit x im Bereich von 2,27 bis 1 und n im Bereich von 0 bis 4.

Ganz besonders bevorzugt sind sekundäres Aluminiumphosphonat [$Al_2(HPO_3)_3$, CAS-Nr. 71449-76-8] und sekundäres Aluminiumphosphonattetrahydrat [$Al_2(HPO_3)_3 \cdot 4H_2O$, CAS-Nr. 156024-71-4], insbesondere bevorzugt ist sekundäres Aluminiumphosphonat [$Al_2(HPO_3)_3$].

Die Herstellung der erfindungsgemäß als Komponente B) einzusetzenden Aluminiumsalze der Phosphonsäure ist zum Beispiel in WO 2013/083247 A1 beschrieben. Sie erfolgt üblicherweise durch Umsetzung einer Aluminiumquelle,

bevorzugt Aluminiumisopropoxid, Aluminiumnitrat, Aluminiumchorid oder Aluminiumhydroxid, mit einer Phosphorquelle, bevorzugt Phosphonsäure, Ammoniumphosphonat, Alkaliphosphonat, und wahlweise mit einem Templat in einem Lösungsmittel bei 20 bis 200°C während einer Zeitspanne von bis zu 4 Tagen. Aluminiumquelle und Phosphorquelle werden dazu vermischt, unter hydrothermalen Bedingungen oder am Rückfluss erhitzt, abfiltriert, gewaschen und getrocknet.

Bevorzugte Template dabei sind 1,6 Hexandiamin, Guanidincarbonat oder Ammoniak. Bevorzugtes Lösungsmittel ist Wasser.

**Komponente C)**

Als Komponente C) enthalten die Zusammensetzungen mindestens Dipentaerythritol [CAS-Nr. 126-58-9] oder Tripentaerythritol [CAS-Nr. 78-24-0], wobei Dipentaerythritol insbesondere bevorzugt ist.

**Komponente D)**

Als Komponente D) enthalten die Zusammensetzungen eines oder mehrere organische Phosphinsäuresalze der oben angegebenen Formel (I) und/oder eines oder mehrere Diphosphinsäuresalze der oben angegebenen Formel (II) und/oder deren Polymere. Phosphinsäuresalze und Diphosphinsäuresalze werden im Rahmen der vorliegenden Erfindung auch als Phosphinate bezeichnet.

Bevorzugt steht M in den Formeln (I) oder (II) für Aluminium. Bevorzugt sind $R^1$, $R^2$ in den Formeln (I) und (II) gleich oder verschieden und bedeuten $C_1$-$C_6$-Alkyl, linear oder verzweigt und/oder Phenyl. Besonders bevorzugt sind $R^1$, $R^2$ gleich oder verschieden und bedeuten Methyl, Ethyl, n-Propyl, iso-Propyl, n-Butyl, tert.-Butyl, n-Pentyl und/oder Phenyl.

Bevorzugt bedeutet $R^3$ in Formel (II) Methylen, Ethylen, n-Propylen, iso-Propylen, n-Butylen, tert.-Butylen, n-Pentylen, n-Octylen, n-Dodecylen, Phenylen, Naphthylen, Methyl-phenylen, Ethylphenylen, tert.-Butylphenylen, Methylnaphthylen, Ethylnaphthylen, tert.-Butylnaphthylen, Phenylmethylen, Phenylethylen, Phenylpropylen oder Phenylbutylen. Besonders bevorzugt bedeutet $R^3$ Phenylen oder Naphthylen. Geeignete Phosphinate sind in der WO-A 97/39053 beschrieben, deren Inhalt in Bezug auf die Phosphinate von der vorliegenden Anmeldung mit umfasst wird. Besonders bevorzugte Phosphinate im Sinne der vorliegenden Erfindung sind Aluminium- und Zinksalze des Dimethylphosphinats, des Ethylmethylphosphinats, des Diethylphosphinats und des Methyl-n-propylphosphinats sowie deren Mischungen.

Bevorzugt steht m in Formel (I) für 2 und 3, besonders bevorzugt für 3.
Bevorzugt steht n in Formel (II) für 1 und 3, besonders bevorzugt für 3.
Bevorzugt steht x in Formel (II) für 1 und 2, besonders bevorzugt für 2.

Ganz besonders bevorzugt wird als Komponente D) Aluminium-tris(diethylphosphinat) [CAS Nr. 225789-38-8] eingesetzt, das z. B. von der Fa. Clariant International Ltd. Muttenz, Schweiz unter dem Handelsnamen Exolit® OP1230 oder Exolit® OP1240 angeboten wird.

**Komponente E)**

Als Komponenten E) können die Zusammensetzungen wenigstens einen Thermostabilisator ausgewählt aus der Gruppe der sterisch gehinderten Phenole enthalten.

Dabei handelt es sich um solche Verbindungen mit phenolischer Struktur, die am phenolischen Ring mindestens eine sterisch anspruchsvolle Gruppe aufweisen. Bevorzugte sterisch gehinderte Phenole sind Verbindungen mit einem Molekülbaustein der Formel (VI),

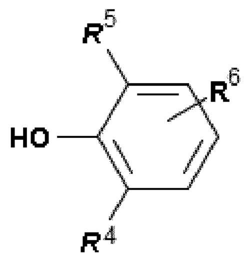

(VI)

worin $R^4$ und $R^5$ für eine Alkylgruppe, für eine substituierte Alkylgruppe oder für eine substituierte Triazolgruppe stehen, wobei die Reste $R^4$ und $R^5$ gleich oder verschieden sein können, und $R^6$ für eine Alkylgruppe, für eine substituierte

Alkylgruppe, für eine Alkoxygruppe oder für eine substituierte Aminogruppe steht.

Sterische Hinderung bezeichnet in der organischen Chemie den Einfluss der räumlichen Ausdehnung eines Moleküls auf den Verlauf der Reaktion. Der Begriff beschreibt die Tatsache, dass manche Reaktionen nur sehr langsam oder gar nicht ablaufen, wenn sich in der Umgebung der reagierenden Atome große und raumerfüllende Gruppen befinden. Ein bekanntes Beispiel für den Einfluss der sterischen Hinderung ist die Umsetzung von Ketonen in einer Grignard-Reaktion. Wird Di-*tert*-butylketon bei der Grignard-Reaktion eingesetzt, ist die Reaktion aufgrund der sehr raumerfüllenden tert-butyl-Gruppen so stark verlangsamt, dass maximal eine Methylgruppe eingeführt werden kann, noch größere Reste reagieren überhaupt nicht mehr.

Ganz besonders bevorzugte Thermostabilisatorn der Formel (VI) werden als Antioxidantien beispielsweise in der DE-A 27 02 661 (US-A 4 360 617) beschrieben, deren Inhalt von der vorliegenden Anmeldung vollumfänglich umfasst wird. Eine weitere Gruppe bevorzugter sterisch gehinderter Phenole leitet sich von substituierten Benzolcarbonsäuren ab, insbesondere von substituierten Benzolpropionsäuren.

Besonders bevorzugte Verbindungen aus dieser Klasse sind Verbindungen der Formel (VII)

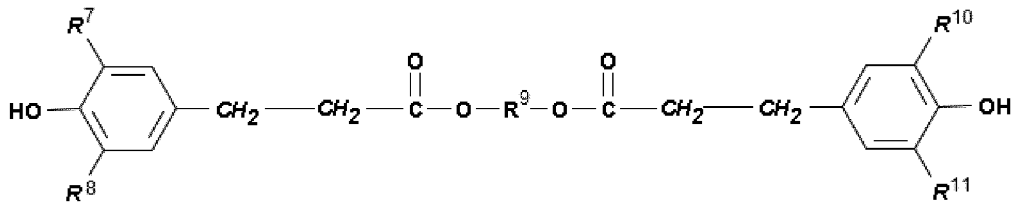

(VII)

worin $R^7$, $R^8$, $R^{10}$ und $R^{11}$ unabhängig voneinander $C_1$-$C_8$-Alkylgruppen darstellen, die ihrerseits substituiert sein können (mindestens eine davon ist eine sterisch anspruchsvolle Gruppe) und $R^9$ einen zweiwertigen aliphatischen Rest mit 1 bis 10 C-Atomen bedeutet, der in der Hauptkette auch C-O-Bindungen aufweisen kann. Bevorzugte Verbindungen der Formel (VII) sind Verbindungen der Formeln (VIII), (IX) und (X).

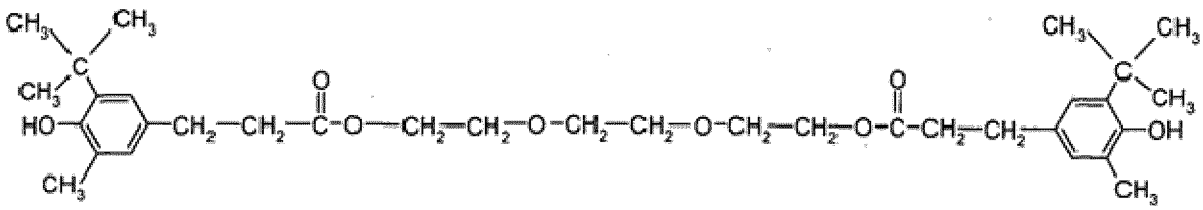

(VIII)

Formel (VIII) ist das Irganox® 245 der Firma BASF SE, [CAS Nr. 36443-68-2] mit der Bezeichnung Triethylene glycol bis(3-tert-butyl-4-hydroxy-5-methylphenyl)propionate.

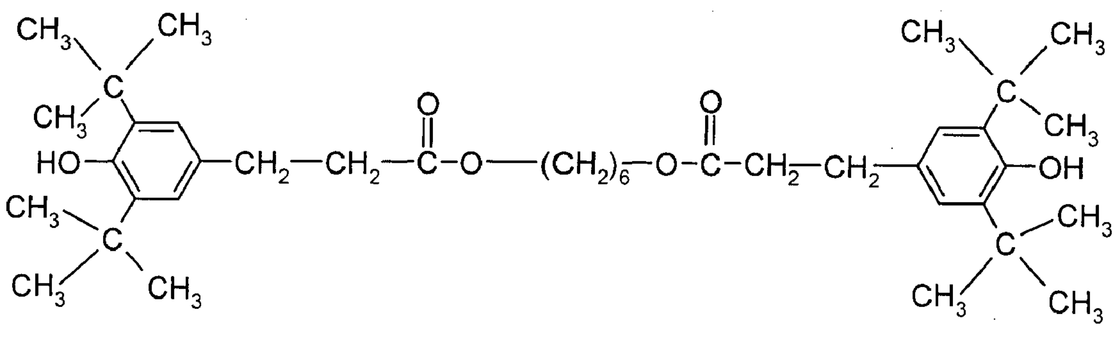

(IX)

Formel (IX) ist das Irganox® 259 der Firma BASF SE, [CAS Nr. 35074-77-2] mit der Bezeichnung 1,6-Hexamethylene bis (3,5-di-(tert)-butyl-4-hydroxyhydrocinnamate.

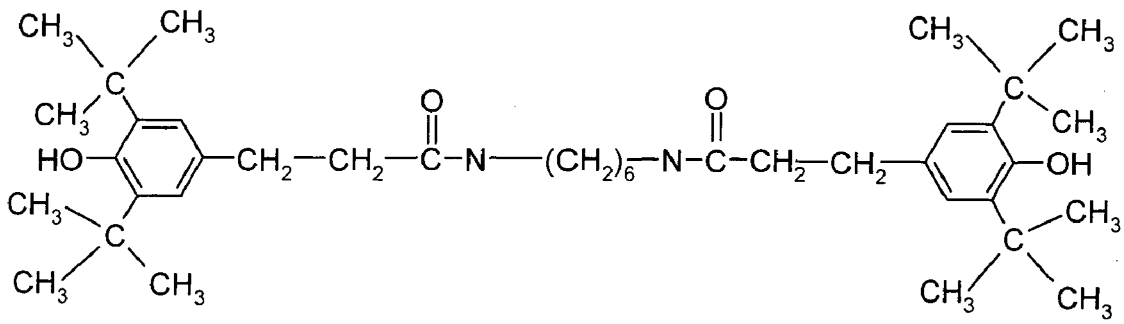

(X)

Formel (X) ist das Irganox® 1098 der Firma BASF SE, [CAS Nr. 23128-74-7] mit der Bezeichnung N,N'-Hexamethylene bis[3-(3,5-di-t-butyl-4 -hydroxyphenyl)propionamide].

Ganz besonders bevorzugte als Komponente E) einzusetzende Thermostabilisatoren werden ausgewählt aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distearyl-3,5-di-tert.-butyl-4-hydroxybenzyl-phosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Insbesondere bevorzugte als Komponente E) einzusetzende Thermostabilisatoren aus der Gruppe der sterisch gehinderten Phenole sind 2,2'-Methylen-bis-(4-methyl-6-tert.-butylphenol), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, Ludwigshafen, Deutschland.

Erfindungsgemäß insbesondere ganz besonders bevorzugter Thermostabilistator aus der Gruppe der sterisch gehinderten Phenole ist N,N'-Hexamethylen-bis-3,5-di-tert.-butyl-4-hydroxyhydrocinnamid, [CAS Nr. 23128-74-7], das als Irganox® 1098 bei der BASF SE, Ludwigshafen, Deutschland oder als Lowinox® HD 98 u. a. von Weihai Jinwei ChemIndustry Co., Ltd. erhältlich ist.

**Komponente F)**

Als Komponenten F) können die Zusammensetzungen Glasfasern enthalten.

Gemäß "http://de.wikipedia.org/wiki/Faser-Kunststoff-Verbund" unterscheidet man geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 $\mu$m liegt.

Erfindungsgemäß bevorzugt werden als Komponente F) geschnittene Langglasfasern mit einer Ausgangslänge im Bereich von 1 bis 50 mm, besonders bevorzugt im Bereich von 1 bis 10 mm, ganz besonders bevorzugt im Bereich von 2 bis 7 mm eingesetzt.

Bevorzugte als Komponente F) einzusetzende Glasfasern haben einen Faserdurchmesser im Bereich von 7 bis 18 $\mu$m, besonders bevorzugt im Bereich von 9 bis 15 $\mu$m. Die Glasfasern der Komponente F) werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt.

Besonders bevorzugte Haftvermittler auf Silanbasis für die Behandlung der als Komponente F) einzusetzenden Glasfasern sind Silanverbindungen der allgemeine Formel (XI)

$$(X\text{-}(CH_2)_q)_k\text{-}Si\text{-}(O\text{-}C_rH_{2r+1})_{4-k} \qquad (XI)$$

worin

X für $NH_2$-, Carboxyl-, HO- oder

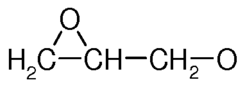

steht,

q in Formel (XI) für eine ganze Zahl von 2 bis 10, bevorzugt 3 bis 4 steht,

r in Formel (XI) für eine ganze Zahl von 1 bis 5, bevorzugt 1 bis 2 steht und

k in Formel (XI) für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidyl- oder eine Carboxylgruppe enthalten, wobei Carboxylgruppen insbesondere ganz besonders bevorzugt sind.

Für die Ausrüstung der als Komponente F) einzusetzenden Glasfasern wird der Haftvermittler, bevorzugt die Silanverbindungen gemäß Formel (XI), bevorzugt in Mengen von 0,05 bis 2 Gew.-%, besonders bevorzugt in Mengen von 0,25 bis 1,5 Gew.-% und ganz besonders bevorzugt in Mengen von 0,5 bis 1 Gew.-%, jeweils bezogen auf 100 Gew.-% Komponente F), eingesetzt.

Die Glasfasern der Komponente F) können bedingt durch die Verarbeitung zur Zusammensetzung bzw. zum Erzeugnis in der Zusammensetzung bzw. im Erzeugnis kürzer sein, als die ursprünglich eingesetzten Glasfasern. So liegt der arithmetische Mittelwert der Glasfaserlänge nach der Verarbeitung häufig nur noch im Bereich von 150 $\mu$m bis 300 $\mu$m.

Gemäß "http://www.r-g.de/wiki/Glasfasern" werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:

- E-Glas, das meistverwendete Material mit optimalem Preis-Leistungsverhältnis (E-Glas von R&G)
- H-Glas, Hohlglasfasern für reduziertes Gewicht (R&G Glashohlfasergewebe 160 g/$m^2$ und 216 g/$m^2$)
- R, S-Glas, für erhöhte mechanische Anforderungen (S2-Glas von R&G)
- D-Glas, Borsilicatglas für erhöhte elektrische Anforderungen
- C-Glas, mit erhöhter chemischer Widerstandsfähigkeit
- Quarzglas, mit hoher Temperaturbeständigkeit

Weitere Beispiele finden sich unter "http://de.wikipedia.org/wiki/Glasfaser". Für die Kunststoffverstärkung haben E-Glasfasern die größte Bedeutung erlangt. E steht für Elektro-Glas, da es ursprünglich vor allem in der Elektroindustrie eingesetzt wurde.

Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z. B. Alu-Legierungen), wobei das spezifische Gewicht von E-Glasfasern enthaltenden Laminaten niedriger ist, als das der Metalle. E-Glasfasern sind unbrennbar, hitzefest bis ca. 400 °C und beständig gegen die meisten Chemikalien und Witterungseinflüsse.

**Komponente G)**

Als Komponente G) können die Zusammensetzungen wenigstens einen von der Komponenten E) verschiedenen, weiteren **Füllstoff oder Verstärkungsstoff** enthalten.

Dabei können auch Mischungen aus zwei oder mehreren unterschiedlichen Füllstoffen und/oder Verstärkungsstoffen, bevorzugt auf Basis von Talk, Glimmer, Silikat, amorphem Quarzglas, Quarzmehl, Wollastonit, Kaolin, amorphe

Kieselsäuren, nanoskalige Mineralien, besonders bevorzugt Montmorillonite, Magnesiumcarbonat, Kreide, Feldspat, Bariumsulfat und/oder faserförmige Füllstoffe und/oder Verstärkungsstoffe auf der Basis von Kohlenstofffasern aber auch unbehandelte, oberflächenmodifizierte oder beschlichtete kugelförmige Füll- und Verstärkungsstoffe aus Glas eingesetzt werden. In einer alternativen Ausführungsform kann als Komponente G) aber auch - sofern es der Bedarf erfordert - Nano-Böhmit eingesetzt werden. Bevorzugt werden mineralische teilchenförmige Füllstoffe auf der Basis von Talk, Glimmer, Silikat, Wollastonit, Kaolin, amorphe Kieselsäuren, Magnesiumcarbonat, Kreide, Feldspat und/oder Bariumsulfat eingesetzt. Besonders bevorzugt werden mineralische teilchenförmige Füllstoffe auf der Basis von Talk, Wollastonit und/oder Kaolin eingesetzt.

Besonders bevorzugt werden ferner auch nadelförmige mineralische Füllstoffe eingesetzt. Unter nadelförmigen, mineralischen Füllstoffen wird erfindungsgemäß ein mineralischer Füllstoff mit stark ausgeprägtem nadelförmigen Charakter verstanden. Bevorzugt seien nadelförmige Wollastonite genannt. Bevorzugt weist der nadelförmige, mineralische Füllstoff ein Länge : Durchmesser - Verhältnis im Bereich von 2:1 bis 35:1, besonders bevorzugt im Bereich von 3:1 bis 19:1, insbesondere bevorzugt im Bereich von 4:1 bis 12:1 auf. Die mittlere Teilchengröße der nadelförmigen, mineralischen Füllstoffe liegt bevorzugt bei kleiner 20 $\mu$m, besonders bevorzugt bei kleiner 15 $\mu$m, insbesondere bevorzugt bei kleiner 10 $\mu$m, bestimmt mit einem CILAS GRANULOMETER.

Besonders bevorzugt wird aber auch nicht-faserförmiges und nicht-geschäumtes gemahlenes Glas mit einer Teilchengrößenverteilung, die einen d90 im Bereich von 5 bis 250 $\mu$m, bevorzugt im Bereich von 10 bis 150 $\mu$m, besonders bevorzugt im Bereich von 15 bis 80 $\mu$m, ganz besonders bevorzugt im Bereich von 16 bis 25 $\mu$m aufweist und einer Länge im Bereich von 0,01 bis 0,5 mm, eingesetzt. Bevorzugt wird nicht-faserförmiges und nicht-geschäumtes gemahlenes Glas eingesetzt, das zudem einen d10 im Bereich von 0,3 bis 10 $\mu$m, bevorzugt im Bereich von 0,5 bis 6 $\mu$m, besonders bevorzugt im Bereich von 0,7 bis 3 $\mu$m aufweist. Dabei ist solches nicht-faserförmiges und nicht-geschäumtes gemahlenes Glas ganz besonders bevorzugt, das ferner einen d50 im Bereich von 3 bis 50 $\mu$m, bevorzugt im Bereich von 4 bis 40 $\mu$m, besonders bevorzugt im Bereich von 5 bis 30 $\mu$m aufweist.

Bezüglich der d10, d50 und d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d10-Wert diejenige Partikelgröße ist, unterhalb derer 10% der Partikelmenge liegen, der d50-Wert diejenige Partikelgröße ist, unterhalb derer 50% der Partikelmenge liegen (Medianwert) und der d90-Wert diejenige Partikelgröße ist, unterhalb derer 90% der Partikelmenge liegen.

Bevorzugt weist ein erfindungsgemäß einzusetzendes nicht-faserförmiges und nicht-geschäumtes gemahlenes Glas eine mittlere Teilchengröße im Bereich von 3 bis 60 $\mu$m, insbesondere bevorzugt im Bereich von 15 bis 30 $\mu$m auf. Die Angaben der Teilchengrößenverteilung bzw. der Teilchengrößen beziehen sich hierbei auf sogenannte oberflächenbasierte Teilchengrößen, jeweils vor Einarbeitung in die thermoplastische Formmasse. Hierbei werden die Durchmesser der Flächen der jeweiligen Glaspartikel mit den Flächen imaginärer sphärischer Teilchen (Kugeln) in Beziehung gesetzt. Dies geschieht mit einem nach dem Prinzip der Laserverdunklung arbeitenden Teilchengrößenanalysator der Fa. Ankersmid (Eye Tech® mit der darin enthaltender EyeTech®-Software und ACM-104 Messzelle, Ankersmid Lab, Oosterhout, Niederlande). Aber auch die bereits oben erläuterte Laserdiffraktometrie gemäß der Norm ISO 13320 kann zur Teilchengrößenbestimmung herangezogen werden.

Erfindungsgemäß bevorzugt ist das nicht-faserförmige und nicht-geschäumte gemahlene Glas von partikelförmiger, nicht zylindrischer Gestalt und hat ein Längen- zu Dickenverhältnis kleiner 5, bevorzugt kleiner als 3, besonders bevorzugt kleiner 2. Der Wert Null ist selbstverständlich ausgeschlossen.

Das als Komponente G) besonders bevorzugt einzusetzende nicht-geschäumte und nicht faserförmige gemahlene Glas ist zudem dadurch gekennzeichnet, dass es nicht die für faserförmiges Glas typische Glasgeometrie mit zylindrischem oder ovalen Querschnitt mit einem Längen- zu Durchmesserverhältnis (L/D-Verhältnis) größer 5 aufweist.

Das erfindungsgemäß als Komponente G) besonders bevorzugt einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Als Ausgangsmaterial kommen alle geometrischen Formen von erstarrtem Glas in Betracht.

Bevorzugte Ausgangsmaterialien für die Vermahlung zu erfindungsgemäß einzusetzendem nicht-faserförmigem und nicht-geschäumtem, gemahlenem Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nichtgefärbtes Glas als Ausgangsmaterial bevorzugt ist.

Als Ausgangsglas für die Vermahlung kommen prinzipiell alle Glasarten in Betracht wie sie z. B. in DIN1259-1 beschrieben sind. Bevorzugt sind Kalk-Natron-Glas, Floatglas, Quarzglas, Bleikristallglas, Borsilikatglas A-Glas und E-Glas, wobei Kalk-Natron-Glas, Borsilikatglas, A-Glas und E-Glas besonders bevorzugt sind, A-Glas und E-Glas ganz besonders bevorzugt sind, insbesondere E-Glas. Bezüglich physikalischer Daten und Zusammensetzung von E-Glas

sei auf "http://wiki.r-g.de/index.php?title=Glasfasern" verwiesen. Erfindungsgemäß insbesondere bevorzugt einzusetzendes nicht-faserförmiges und nicht-geschäumtes gemahlenes E-Glas zeichnet sich durch wenigstens eines der nachfolgend in **Tabelle I** genannten Merkmale aus:

**Tabelle I**

| Eigenschaften E-Glas | Einheit | E-Glas |
|---|---|---|
| Dichte | $g/cm^2$ bei 20 °C | 2,6 |
| Zugfestigkeit | MPa | 3400 |
| Zug_E-Modul | GPa | 73 |
| Bruchdehnung | % | 3,5-4 |
| **Chemische Zusammensetzung** | **Einheit** | **Wert** |
| $SiO_2$ | % | 53-55 |
| $Al_2O_3$ | % | 14-15 |
| $B_2O_3$ | % | 6-8 |
| CaO | % | 17-22 |
| MgO | % | <5 |
| $K_2O$, $Na_2O$ | % | <1 |
| Andere Oxide | % | ca.1 |

Ebenfalls besonders bevorzugt für die Herstellung des als Komponente G) erfindungsgemäß einzusetzenden nicht-geschäumten und nicht-faserförmigen Glases sind Glasarten, bei denen der Gehalt an $K_2O$ kleiner oder gleich 2 Gew.-% bezogen auf alle Komponenten des Glases ist. Das erfindungsgemäß als Komponente G) einzusetzende nicht-geschäumte und nicht-faserförmige gemahlene Glas kann beispielsweise von der Firma VitroMinerals, Covington, GA, USA bezogen werden. Es wird als sogenanntes CS Glass Powder in den Spezifikationen CS-325, CS-500 und CS-600 oder auch als LA400 angeboten (siehe auch "www.glassfillers.com" oder Chris DeArmitt, Additives Feature, Mineral Fillers, COMPOUNDING WORLD, Februar 2011, Seiten 28-38 bzw. "www.compoundingworld.com").

Das in bevorzugter Ausführungsform als Komponente G) einzusetzende nicht-geschäumte und nicht-faserförmige, gemahlene Glas hat vorzugsweise eine Dichte (nicht Schüttdichte !) nach ASTM C 693 im Bereich von 2400 bis 2700 $kg/m^3$, besonders bevorzugt im Bereich von 2400 bis 2600 $kg/m^3$ und unterscheidet sich damit deutlich von Schaumglas (Dichte = 100 - 165 $kg/m^3$) Schaumglas Granulat (Dichte = 130 - 170 $kg/m^3$) und Blähglas (Dichte = 110 - 360 $kg/m^3$) siehe auch AGY Produktbroschüre Pub. No. LIT-2006-111 R2 (02/06).

Erfindungsgemäß bevorzugt ist das als Komponente G) einzusetzende nicht-geschäumte und nicht-faserförmige, gemahlene Glas mit einer Oberflächenmodifizierung oder Schlichte auf Basis von Aminoalkyltrialkoxysilan versehen. In alternativen oder bevorzugten Ausführungsformen kann das nicht-geschäumte und nicht-faserförmige gemahlene Glas mit zusätzlicher Oberflächenmodifizierung oder Schlichte auf Silan- bzw. Siloxanbasis versehen sein, bevorzugt mit Glycidyl-, Carboxyl, Alkenyl-, Acryloxyalkyl-und/oder Methacryloxyalkyl- funktionalisierten Trialkoxysilanen oder deren wässriger Hydrolysate sowie Kombinationen daraus.

Bevorzugte Aminoalkyltrialkoxysilane sind Aminopropyltrimethoxysilan, Aminobutyltrimethoxysilan, Aminopropyltriethoxysilan, Aminobutyltriethoxysilan oder deren wässrige Hydrolysate, wobei Aminopropyltriethoxysilan ganz besonders bevorzugt ist.

Die Aminoalkyltrialkoxysilane werden bevorzugt in Mengen von 0,01 Gew.-% bis 1,5 Gew.-%, besonders bevorzugt in Mengen von 0,05 Gew.-% bis 1,0 Gew.-% und ganz besonders bevorzugt in Mengen von 0,1 Gew.-% bis 0,5 Gew.-% bezogen auf das nicht-geschäumte und nicht-faserförmige gemahlene Glas zur Oberflächenbeschichtung eingesetzt.

Das Ausgangsglas für die Vermahlung kann bereits mit Oberflächenmodifizierung oder Schlichte behandelt sein. Ebenso kann das erfindungsgemäß als Komponente G) einzusetzende nicht-geschäumte und nicht-faserförmige gemahlene Glas nach der Vermahlung mit Oberflächenmodifizierung oder Schlichte behandelt werden.

Insbesondere kann MF7900 der Lanxess Deutschland GmbH, Köln, eingesetzt werden, ein nicht-faserförmiges und nicht-geschäumtes gemahlenes Glas auf Basis E-Glas, mit einem d90 von 54 $\mu$m, einem d50 von 14 $\mu$m, einem d10 von 2,4 $\mu$m und einer mittleren Teilchengröße von 21 $\mu$m, jeweils bezogen auf die Teilchenoberfläche, sowie enthaltend ca. 0,1 Gew.-% Triethoxy(3-aminopropyl)silan-Schlichte.

Das erfindungsgemäß als Komponente G) einzusetzende nicht-geschäumte und nicht-faserförmige, gemahlene Glas kann bedingt durch die Verarbeitung zur erfindungsgemäßen Zusammensetzung bzw. zu daraus herzustellenden Erzeugnissen und in den Erzeugnissen selber einen kleineren d90- bzw. d50-Wert bzw. d10-Wert bzw. eine kleinere mittlere Teilchengröße aufweisen, als die ursprünglich eingesetzten gemahlenen Partikel.

Abgesehen vom nicht-geschäumten und nicht-faserförmigen, gemahlenen Glas sind auch die als Komponente G) ferner genannten Füllstoffe und/oder Verstärkungsstoffe in einer bevorzugten Ausführungsform oberflächenmodifiziert, vorzugsweise mit einem Haftvermittler bzw. Haftvermittlersystem, besonders bevorzugt einem Haftvermittlersystem auf Silanbasis. Die Vorbehandlung ist jedoch nicht unbedingt erforderlich. Als Haftvermittler kommen ebenfalls die bereits oben beschriebenen Silanverbindungen der allgemeinen Formel (XI) infrage.

Für die Ausrüstung der Komponente G) werden die Silanverbindungen im Allgemeinen in Mengen von 0,05 bis 2 Gew.-%, vorzugsweise in Mengen von 0,25 bis 1,5 Gew.-% und insbesondere in Mengen von 0,5 bis 1 Gew.-% bezogen auf den mineralischen Füllstoff der Komponente G) zur Oberflächenbeschichtung eingesetzt.

Auch diese ferner genannten Füllstoffe der Komponente G) können bedingt durch die Verarbeitung zur Zusammensetzung bzw. zum Erzeugnis aus der Zusammensetzung bzw. im Erzeugnis einen kleineren d97- bzw. d50-Wert aufweisen, als die ursprünglich eingesetzten Füllstoffe.

**Komponente H)**

Als Komponente H) wird wenigstens ein weiteres, von den Komponenten B) bis E) unterschiedliches, Additiv eingesetzt.

Bevorzugte als Komponente H) einzusetzende Additive sind von Komponente E) verschiedene Antioxidantien und Thermostabilisatoren, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Farbstoffe, Pigmente, Laserabsorber, Gleit- und/oder Entformungsmittel, weitere von Komponente B) und E) verschiedene Flammschutzmittel, Fließhilfsmittel und Elastomermodifikatoren. Die Additive können alleine oder in Mischung bzw. in Form von Masterbatchen eingesetzt werden.

Bevorzugte **Thermostabilisatoren der Komponente H) sind** Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt.

In einer alternativen Ausführungsform können als Komponente H) aber auch - sofern es der Bedarf erfordert - Kupfersalze, insbesondere Kupfer(I)iodid, dieses bevorzugt in Kombination mit Kaliumiodid, und/oder Natriumhypophosphit $NaH_2PO_2$ eingesetzt werden.

Als **UV-Stabilisatoren** werden bevorzugt substituierte Resorcine, Salicylate, Benzotriazole und Benzophenone eingesetzt.

Als **Farbmittel** werden bevorzugt anorganische Pigmente, insbesondere Ultramarinblau, Eisenoxid, Titandioxid, Zinksulfid oder Ruß, weiterhin organische Pigmente, bevorzugt Phthalocyanine, Chinacridone, Perylene sowie Farbstoffe, bevorzugt Nigrosin und Anthrachinone eingesetzt.

Als **Nukleierungsmittel** werden bevorzugt Natrium- oder Calciumphenylphosphinat, Aluminiumoxid oder Siliziumdioxid sowie ganz besonders bevorzugt Talkum eingesetzt, wobei diese Aufzählung nicht abschließend ist.

Als **Fließhilfsmittel** werden bevorzugt Copolymerisate aus mindestens einem $\alpha$-Olefin mit mindestens einem Methacrylsäurester oder Acrylsäureester eines aliphatischen Alkohols eingesetzt. Besonders bevorzugt sind dabei Copolymerisate, bei denen das $\alpha$-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel geeignete Copolymerisate zeichnen sich neben der Zusammensetzung auch durch das niedrige Molekulargewicht aus. Dementsprechend sind für die erfindungsgemäß vor thermischem Abbau zu bewahrenden Zusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen ISO 1133 oder ASTM D 1238.

Bevorzugt als Komponente H) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Die als Komponente H) einzusetzenden **Elastomermodifikatoren** umfassen bevorzugt u.a. ein oder mehrere Pfropfpolymerisate von

H.1 5 bis 95 Gew.-%, vorzugsweise 30 bis 90 Gew.-%, wenigstens eines Vinylmonomeren und

H.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage H.2 hat im allgemeinen eine mittlere Teilchengröße (d50-Wert) von 0,05 bis 10 μm, vorzugsweise 0,1 bis 5 μm, besonders bevorzugt 0,2 bis 1 μm.

Monomere zu H.1 sind vorzugsweise Gemische aus

H.1.1 50 bis 99 Gew.-% Vinylaromaten und/oder kernsubstituierten Vinylaromaten, insbesondere Styrol, α-Methylstyrol, p-Methylstyrol, p-Chlorstyrol, und/oder Methacrylsäure-($C_1$-$C_8$)-Alkylester, insbesondere Methylmethacrylat, Ethylmethacrylat und

H.1.2 1 bis 50 Gew.-% Vinylcyanide, insbesondere ungesättigte Nitrile wie Acrylnitril und Methacrylnitril, und/oder (Meth)Acrylsäure-($C_1$-$C_8$)-alkylester, insbesondere Methylmethacrylat, Glycidylmethacrylat, n-Butylacrylat, t-Butylacrylat, und/oder Derivate ,insbesondere Anhydride und Imide ungesättigter Carbonsäuren, insbesondere Maleinsäureanhydrid oder N-Phenyl-Maleinimid.

Bevorzugte Monomere H.1.1 sind ausgewählt aus mindestens einem der Monomere Styrol, α-Methylstyrol und Methylmethacrylat, bevorzugte Monomere H.1.2 sind ausgewählt aus mindestens einem der Monomere Acrylnitril, Maleinsäureanhydrid, Glycidylmethacrylat und Methylmethacrylat.

Besonders bevorzugte Monomere sind H.1.1 Styrol und H.1.2 Acrylnitril.

Für die in den Elastomermodifikatoren einzusetzenden Pfropfpolymerisate geeignete Pfropfgrundlagen H.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen H.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß H.1.1 und H.1.2, mit der Maßgabe, dass die Glasübergangstemperatur der Komponente H.2 bei <10°C, vorzugsweise bei <0°C, besonders bevorzugt bei <-10°C liegt.

Besonders bevorzugte Propfgrundlagen H.2 sind ABS-Polymerisate (Emulsions-, Masse-und Suspensions-ABS) wobei ABS für Acrylnitril-Butadien-Styrol steht, wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage H.2 beträgt bevorzugt mindestens 30 Gew.-%, besonders bevorzugt mindestens 40 Gew.-% (in Toluol gemessen).

Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen H.2 die vorzugsweise Polymerisate aus Acrylsäurealkylestern, gegebenenfalls mit bis zu 40 Gew.-%, bezogen auf H.2 anderen polymerisierbaren, ethylenisch ungesättigten Monomeren. Zu den bevorzugten polymerisierbaren Acrylsäureestern gehören $C_1$-$C_8$-Alkylester, vorzugsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat, Glycidylester sowie Mischungen dieser Monomeren. Dabei sind Propfpolymerisate mit Butylacrylat als Kern und Methylmethacrylaten als Schale, insbesondere Paraloid® EXL2300, Fa. Dow Corning Corporation, Midland Michigan, USA, besonders bevorzugt.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02

bis 5 Gew.-%, insbesondere 0,05 bis 2 Gew.-%, bezogen auf die Pfropfgrundlage H.2.

Bei cyclischen vernetzenden Monomeren mit mindestens 3 ethylenisch ungesättigten Gruppen ist es vorteilhaft, die Menge auf unter 1 Gew.-% der Pfropfgrundlage H.2 zu beschränken.

Bevorzugte "andere" polymerisierbare, ethylenisch ungesättigte Monomere, die neben den Acrylsäureestern gegebenenfalls zur Herstellung der Pfropfgrundlage H.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage H.2 sind Emulsionspolymerisate, die einen Gelgehalt von mindestens 60 Gew.-% aufweisen.

Weitere bevorzugt geeignete Pfropfgrundlagen gemäß H.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM-und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Bevorzugte weitere **Flammschutzmittel** sind mineralische Flammschutzmittel, stickstoffhaltige Flammschutzmittel oder phosphorhaltige Flammschutzmittel verschieden von Komponente B) oder E).

Bevorzugte stickstoffhaltige Flammschutzmittel sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz, Melamincyanurat und Kondensationsprodukte des Melamins wie z. B. Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive wie Aluminium- und/oder Magnesiumhydroxid, Ca-Mg-Carbonat-Hydrate (z. B. DE-A 4 236 122) eingesetzt werden.

In Frage kommen ferner Flammschutzmittelsynergisten aus der Gruppe der sauerstoff-, stickstoff- oder schwefelhaltigen Metallverbindungen, wobei zinkfreie Verbindungen aus den oben genannten Gründen, insbesondere Molybdänoxid, Magnesiumoxid, Magnesiumcarbonat, Calciumcarbonat, Calciumoxid, Titannitrid, Bornitrid, Magnesiumnitrid, Calciumphosphat, Calciumborat, Magnesiumborat oder deren Mischungen besonders bevorzugt sind.

In einer alternativen Ausführungsform können als Komponente H) aber auch - sofern es der Bedarf erfordert unter Berücksichtigung der oben beschriebenen Nachteile - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

In einer alternativen Ausführungsform können als Komponente H) aber auch - sofern der Bedarf es erfordert unter Berücksichtigung der damit verbundenen Nachteile, - halogenhaltige Flammschutzmittel eingesetzt werden.

Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten, insbesondere Antimontrioxid oder Antimontpentoxid, eingesetzt werden können.

Bevorzugte phosphorhaltige Flammschutzmittel verschieden von Komponente B) oder E) sind roter Phosphor, anorganische Metallhypophosphite, insbesondere Aluminiumhypophosphit, Metallphosphonate insbesondere Calciumphosphonat, Derivate der 9,10-Dihydro-9-oxa-10-phosphaphenanthren-10-oxide (DOPO-Derivate), Resorcinol-bis-(diphenylphosphat) (RDP), einschließlich Oligomere sowie Bisphenol-A-bis-diphenylphosphat (BDP) einschließlich Oligomere, ferner Melaminpyrophosphat und, sofern es der Bedarf erfordert, Melaminpolyphosphat, ferner Melamin-poly(aluminiumphosphat), Melamin-poly(zinkphosphat) oder Phenoxyphosphazenoligomere und deren Mischungen.

Weitere als Komponente H) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die Flammschutzmittel können in Reinform, sowie über Masterbatche oder Kompaktate zugesetzt werden.

Als Komponente H) einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen von 28 bis 32 C-Atomen.

Erfindungsgemäß werden besonders bevorzugt Gleit- und/oder Entformungsmittel aus der Gruppe der Ester, oder Amide gesättigter oder ungesättigter aliphatischer Carbonsäuren mit 8 bis 40 C-Atomen mit aliphatischen gesättigten Alkoholen oder Aminen mit 2 bis 40 C-Atomen sowie Metallsalze gesättigter oder ungesättigter aliphatischer Carbonsäuren mit 8 bis 40 C-Atomen eingesetzt.

Ganz besonders bevorzugt wird wenigstens ein Gleit- und/oder Entformungsmittel aus der Gruppe Ethylen-bis-stearylamid, Calciumstearat und Ethylenglycoldimontanat eingesetzt.

Insbesondere bevorzugt wird Calciumstearat [CAS No. 1592-23-0] oder Ethylen-bis-stearylamid [CAS No 110-30-5] eingesetzt.

Insbesondere besonders bevorzugt wird Ethylen-bis-stearylamid (Loxiol® EBS von Emery Oleochemicals) eingesetzt.

Als Komponente H) bevorzugt einzusetzende **Laserabsorber** werden bevorzugt ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon. Besonders bevorzugt sind Antimontrioxid und Antimonzinnoxid. Ganz besonders bevorzugt ist Antimontrioxid.

Der Laserabsorber, insbesondere das Antimontrioxid, kann direkt als Pulver oder in Form von Masterbatchen eingesetzt werden. Bevorzugte Masterbatche sind solche auf Basis von Polyamid oder solche auf Basis von Polybutylenterephthalat, Polyethylen, Polypropylen, Polyethylen-Polypropylen-Copolymer, Maleinsäureanhydrid-gepfropftem Polyethylen und/oder Maleinsäureanhydrid gepfropftem-Polypropylen, wobei die Polymere für den Antimontrioxid-Masterbatch einzeln oder im Gemisch eingesetzt werden können. Ganz besonders bevorzugt wird Antimontrioxid in Form eines Polyamid 6-basierten Masterbatches eingesetzt.

Der Laserabsorber kann einzeln oder als Gemisch mehrerer Laserabsorber eingesetzt werden.

Laserabsorber können Laserlicht einer bestimmten Wellenlänge absorbieren. In der Praxis liegt diese Wellenlänge im Bereich von 157 nm bis 10,6 $\mu$m. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, und $CO_2$-Laser eingesetzt.

In bevorzugter Ausführung betrifft die vorliegende Erfindung Zusammensetzungen enthaltend

A) Polyamid 6 und/oder Polyamid 66,
B) mindestens ein Aluminiumphosphonat der Formel (III) $Al_2(HPO_3)_3 \cdot (H_2O)_q$ mit q im Bereich von 0 bis 4,
C) Dipentaerythritol und
D) Aluminium-tris(diethylphosphinat).

In bevorzugter Ausführung betrifft die vorliegende Erfindung Zusammensetzungen enthaltend

A) Polyamid 6 und Polyamid 66,
B) mindestens ein Aluminiumphosphonat der Formel (III) $Al_2(HPO_3)_3 \cdot (H_2O)_q$ mit q im Bereich von 0 bis 4,
C) Dipentaerythritol und
D) Aluminium-tris(diethylphosphinat).

In bevorzugter Ausführung betrifft die vorliegende Erfindung Zusammensetzungen enthaltend

A) Polyamid 6 und/oder Polyamid 66,
B) mindestens ein Aluminiumphosphonat der Formel (III) $Al_2(HPO_3)_3 \cdot (H_2O)_q$ mit q im Bereich von 0 bis 4,
C) Dipentaerythritol,
D) Aluminium-tris(diethylphosphinat) und
E) wenigstens einen Thermostabilisator aus der Gruppe
2,2'-Methylen-bis-(4-methyl-6-tert.-butylphenol),
1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat],
N,N'-Hexamethylen-bis-3,5-di-tert.-butyl-4-hydroxyhydrocinnamid (Irganox® 1098) und
Triethylene glycol bis(3-tert-butyl-4-hydroxy-5-methylphenyl)propionate (Irganox® 245).

In bevorzugter Ausführung betrifft die vorliegende Erfindung Zusammensetzungen enthaltend

A) Polyamid 6 und Polyamid 66,
B) mindestens ein Aluminiumphosphonat der Formel (III) $Al_2(HPO_3)_3 \cdot (H_2O)_q$ mit q im Bereich von 0 bis 4,
C) Dipentaerythritol,
D) Aluminium-tris(diethylphosphinat) und
E) N,N'-Hexamethylen-bis-3,5-di-tert.-butyl-4-hydroxyhydrocinnamid (Irganox® 1098).

**Verfahren**

Die vorliegende Erfindung betrifft zudem ein Verfahren zur Verbesserung der Temperaturstabilität PA6 und/oder PA66 basierter Zusammensetzungen und daraus herzustellender Erzeugnisse, ohne dass dabei - im Vergleich zu entsprechenden Zusammensetzungen mit gemäß dem Stand der Technik verbesserter Temperaturstabilität - die Flammwidrigkeit in der UL94-Prüfung nach der Methode UL94V oder die mechanischen Ausgangseigenschaften, gemessen an der Bruchspannung nach ISO527-1,-2 oder gemessen an der Schlagzähigkeit nach Charpy (ISO179-1eU), negativ beeinträchtigt werden, indem man
mindestens ein Aluminiumsalz der Phosphonsäure mit
mindestens einem mehrwertigen Alkohol mit mindestens 3 Alkoholgruppen und einem Molekulargewicht oberhalb von 200 g/mol, wobei Dipentaerythritol oder Tripentaerythritol eingesetzt werden, und
mit einem oder mehreren organischen Phosphinsäuresalzen der Formel (I) und/oder einem oder mehreren Diphosphinsäuresalzen der Formel (II) und/oder deren Polymere,

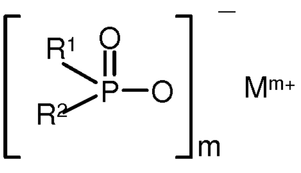 (I) 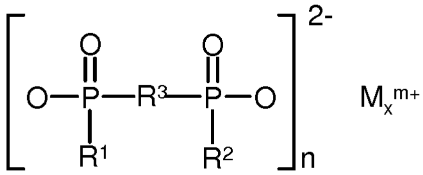 (II)

worin

| | |
|---|---|
| $R^1$, $R^2$ | gleich oder verschieden sind und für ein lineares oder verzweigtes $C_1$-$C_6$-Alkyl, und/oder für $C_6$-$C_{14}$-Aryl stehen, |
| $R^3$ | für lineares oder verzweigtes $C_1$-$C_{10}$-Alkylen, $C_6$-$C_{10}$-Arylen oder für $C_1$-$C_6$- Alkyl-$C_6$-$C_{10}$-arylen oder $C_6$-$C_{10}$-Aryl-$C_1$-$C_6$-alkylen steht, |
| M | für Aluminium, Zink oder Titan steht, |
| m | für eine ganze Zahl von 1 bis 4 steht; |
| n | für eine ganze Zahl von 1 bis 3 steht, |
| x | für 1 und 2 steht, |

wobei n, x und m in Formel (II) gleichzeitig nur solche ganzen Zahlen annehmen können, dass das Diphosphinsäuresalz der Formel (II) als Ganzes ungeladen ist, in Kombination miteinander einsetzt.

Die vorliegende Erfindung betrifft zudem ein Verfahren zur Herstellung von Erzeugnissen, bevorzugt von Elektrobauteilen, besonders bevorzugt von FI-Schaltern und von Leitungsschutzschaltern, ganz besonders bevorzugt von Leitungsschutzschaltern mit Bemessungsströmen >16 A, insbesondere bevorzugt von Leitungsschutzschaltern mit Bemessungsströmen >32 A, insbesondere ganz besonders bevorzugt von Leitungsschutzschaltern mit Bemessungsströmen >64 A durch Einsatz der erfindungsgemäßen Zusammensetzungen im Spritzguss einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, oder beim Blasformen.

Zur Herstellung dieser Erzeugnisse werden die einzelnen Komponenten der erfindungsgemäßen Zusammensetzungen zunächst in wenigstens einem Mischwerkzeug gemischt und diese dann als Formmasse vorliegende Mischung durch wenigstens einen Mischwerkzeugauslass entweder der direkten Weiterverarbeitung zugeführt, oder als Strang ausgetragen und mittels eines Granulators, bevorzugt einer rotierenden Messerwalze, in Granulate gewünschter Länge geschnitten, um für eine spätere Verarbeitung zur Verfügung zu stehen.

Da die meisten Verarbeiter Kunststoff in Form von Granulat benötigen, spielt das Granulieren der aus den erfindungsgemäßen Zusammensetzungen erhältlichen Formmassen eine wesentliche Rolle. Man unterscheidet grundsätzlich zwischen Heiß- und Kaltabschlag. Je nach Verarbeitung resultieren daraus verschiedene Kornformen. Im Falle der Heißabschlags erhält man das die erfindungsgemäßen Zusammensetzungen enthaltende Granulat in Perlen oder Linsenkornform, im Falle des Kaltabschlags erhält man das Granulat in Zylinderformen oder Würfelformen. Erfindungsgemäße Zusammensetzungen enthaltende Formmassen in Granulatform werden bevorzugt durch Kaltabschlag erhalten.

Dem Fachmann steht es frei, verschiedene Mischwerkzeuge einzusetzen, die geeignet sind, ein optimales Mischergebnis hinsichtlich einer Mischung der Komponenten in den aus den erfindungsgemäßen Zusammensetzungen erhältlichen Formmassen zu erzielen. Ein Extruder ist ein bevorzugtes Mischwerkzeug im Sinne der vorliegenden Erfindung. Bevorzugte Extruder sind Einschneckenextruder oder Doppelschneckenextruder sowie die jeweiligen Untergruppen, ganz besonders bevorzugt konventionelle Einschneckenextruder, förderwirksame Einschneckenextruder, gegenläufige Doppelschneckenextruder oder gleichläufige Doppelschneckenextruder. Diese sind dem Fachmann aus Technische Thermoplaste 4. Polyamide, Hrsg.: G. W. Becker und D. Braun, Carl Hanser Verlag, 1998, S. 311-314 sowie K. Brast, Dissertation "Verarbeitung von Langfaser-verstärkten Thermoplasten im direkten Plastifizier-/Pressverfahren", Rheinisch-Westfälische Technische Hochschule Aachen, 2001, S. 30 - 33 bekannt.

Aus den erfindungsgemäß als Formmasse bzw. Granulat vorliegenden Zusammensetzungen werden durch formgebende Verfahren schließlich die erfindungsgemäßen Erzeugnisse, bevorzugt Elektro- bzw. Elektronikerzeugnisse, hergestellt. Bevorzugte formgebende Verfahren sind der Spritzguss oder die Extrusion.

Erfindungsgemäße Verfahren zur Herstellung von Erzeugnissen durch Extrusion oder Spritzguß arbeiten bevorzugt bei Schmelzetemperaturen im Bereich von 230 bis 330°C, besonders bevorzugt bei Schmelzetemperaturen im Bereich von 250 bis 300°C sowie bevorzugt zusätzlich bei Drücken von maximal 2500 bar, besonders bevorzugt bei Drücken von maximal 2000 bar, ganz besonders bevorzugt bei Drücken von maximal 1500 bar und insbesondere bevorzugt bei Drücken von maximal 750 bar.

Das Verfahren des Spritzgusses zeichnet sich dadurch aus, dass die erfindungsgemäße Zusammensetzung als Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt. Man unterscheidet dabei die Arbeitsschritte

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, die erfindungsgemäß einzusetzende Zusammensetzung als Formmasse, insbesondere in Form von Granulat, aufzuschmelzen, zu dosieren, in wenigstens eine Kavität einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Die Spritzguss-Sonderverfahren GIT (Gasinjektionstechnik), WIT (Wasserinjektionstechnik) und Projektilinjektionstechnik (PIT) sind spezialisierte Spritzgussverfahren zur Herstellung hohler Werkstücke. Ein Unterschied zum Standard-Spritzguss besteht in einem speziellen Arbeitsschritt gegen Ende der Werkzeugfüllphase bzw. nach einer definierten Teilfüllung der Gussform. Im verfahrensspezifischen Arbeitsschritt wird ein Prozessmedium über einen so genannten Injektor in die schmelzeflüssige Seele des Vorspritzlings zur Hohlraumbildung injiziert. Dabei handelt es sich um Gas - in der Regel Stickstoff - im Fall der GIT und Wasser im Fall der WIT. Im Falle der PIT wird ein Projektil in die schmelzeflüssige Seele eingeschossen und auf diesem Weg ein Hohlraum ausgebildet.

Im Gegensatz zum Spritzguss wird bei der Extrusion ein endlos geformter Kunststoffstrang, enthaltend die erfindungsgemäße Zusammensetzung, in einem Extruder eingesetzt, wobei der Extruder eine Maschine zur Herstellung thermoplastischer Formstücke ist. Man unterscheidet

- Einschneckenextruder und Doppelschneckenextruder sowie die jeweiligen Untergruppen,
- konventionelle Einschneckenextruder, förderwirksame Einschneckenextruder,
- gegenläufige Doppelschneckenextruder und gleichläufige Doppelschneckenextruder.

Profile im Sinne der vorliegenden Erfindung sind (Bau-)Teile, die über ihre gesamte Länge einen identischen Querschnitt aufweisen. Sie können im Profil-Extrusionsverfahren hergestellt werden. Die grundsätzlichen Verfahrensschritte des Profil-Extrusionsverfahrens sind:

1. Plastifizieren und Bereitstellen der thermoplastischen Schmelze in einem Extruder,
2. Extrusion des thermoplastischen Schmelzestrangs durch eine Kalibrierhülse, die den Querschnitt des zu extrudierenden Profils aufweist,
3. Abkühlung des extrudierten Profils in einem Kalibriertisch,
4. Weitertransport des Profils mit einem Abzug hinter dem Kalibriertisch,
5. Ablängen des zuvor endlosen Profils in einer Schneideanlage,
6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384.

Blasformverfahren im Sinne der vorliegenden Erfindung sind bevorzugt Standard-Extrusionsblasformen, 3D-Extrusionsblasformen, Saugblasformverfahren und die sequentielle Coextrusion.

Die grundsätzlichen Verfahrensschritte des Standard-Extrusionsblasformens sind gemäß (Thielen, Hartwig, Gust, "Blasformen von Kunststoffhohlkörpern", Carl Hanser Verlag, München 2006, Seiten 15 bis 17):

1. Plastifizieren und Bereitstellen der thermoplastischen Schmelze in einem Extruder,
2. Umlenken der Schmelze in eine senkrechte Fließbewegung nach unten und das Ausformen eines schlauchförmigen Schmelze-"Vorformlings",
3. Umschließen des frei hängenden Vorformlings durch eine in der Regel aus zwei Halbschalen bestehende Form, dem Blasformwerkzeug,
4. Einschieben eines Blasdorns oder einer (ggf. mehrerer) Blasnadel(n),
5. Aufblasen des plastischen Vorformlings gegen die gekühlte Wand des Blasformwerkzeugs, wo der Kunststoff abkühlt, erhärtet und die endgültige Form des Formteils annimmt,
6. Öffnen der Form und Entformen des blasgeformten Teils,
7. Entfernen der abgequetschten "Butzen"-Abfälle an beiden Enden des Blasformteils.

Weitere Schritte der Nachbearbeitung können folgen.

Mittels Standard-Extrusionsblasformen lassen sich auch Erzeugnisse mit komplexer Geometrie und mehrachsigen Krümmungen herstellen. Allerdings werden dann Erzeugnisse erhalten, die einen großen Anteil von überschüssigem, abgequetschtem Material enthalten und in großen Bereichen eine Schweißnaht aufweisen.

Beim 3D-Extrusionsblasformen, auch als 3D-Blasformen bezeichnet, wird daher zur Vermeidung von Schweißnähten und zur Reduktion des Materialeinsatzes ein in seinem Durchmesser auf den Artikelquerschnitt angepasster Vorformling mit speziellen Vorrichtungen deformiert und manipuliert und dann direkt in die Blasformkavität eingebracht. Die verbleibende Quetschkante wird somit auf ein Minimum an den Artikelenden reduziert (Thielen, Hartwig, Gust, "Blasformen von Kunststoffhohlkörpern", Carl Hanser Verlag, München 2006, Seite 117-122).

Beim Saugblasformverfahren, auch als Saugblasen bezeichnet, wird der Vorformling direkt aus der Düse des Schlauchkopfes in die geschlossene Blasform gefördert und über einen Luftstrom durch die Blasform hindurch "gesaugt". Nach Austritt des unteren Endes des Vorformlings aus der Blasform wird dieser durch Schließelemente oben und unten abgequetscht, und der Aufblas- und Kühlvorgang schließen sich an (Thielen, Hartwig, Gust, "Blasformen von Kunststoffhohlkörpern", Carl Hanser Verlag, München 2006, Seite 123).

## Verwendung

Gegenstand der vorliegenden Anmeldung ist auch die Verwendung der erfindungsgemäßen Zusammensetzungen als Formmassen im Spritzguss, einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, im Blasformen, besonders bevorzugt Standard-Extrusionsblasformen, 3D-Extrusionsblasformverfahren oder Saugblasformverfahren, um daraus erfindungsgemäße thermostabilisierte Erzeugnisse herzustellen.

Die vorliegende Erfindung betrifft aber auch die Verwendung der erfindungsgemäßen Zusammensetzungen zur Herstellung von Erzeugnissen, aber auch Composit Strukturen und überspritzte Composit Strukturen, vorzugsweise Elektrobauteile, besonders bevorzugt FI-Schalter und Leitungsschutzschalter, ganz besonders bevorzugt Leitungsschutzschalter mit Bemessungsströmen >16 A, insbesondere bevorzugt von Leitungsschutzschaltern mit Bemessungsströmen >32 A, insbesondere ganz besonders bevorzugt von Leitungsschutzschaltern mit Bemessungsströmen >64 A.

Erfindungsgemäße Erzeugnisse können vorzugsweise im Automotive Bereich als Komponenten für Pkw, Lkw, Verkehrsflugzeuge, in der Luft- und Raumfahrt, in der Bahn, in Industrieanlagen aber auch für Garten- und Haushaltsgeräte, als Computer-Hardware, in handgeführten elektronischen Geräten, in Freizeitartikeln und Sportgeräten, als

Maschinenbauteile, in Gebäuden, in Photovoltaikanlagen oder in mechanischen Vorrichtungen eingesetzt werden.

Bevorzugte Anwendungen im Garten und Haushalt sind ohne Einschränkung Waschmaschinen, Spülmaschinen, Trockner, Kühlschränke, Klimaanlagen, Rasenmäher, Heizung, Sicherungskästen, Alarmanlagen.

## Beispiele

Zum Nachweis der erfindungsgemäß beschriebenen Verbesserungen der Eigenschaften wurden zunächst durch Compoundierung entsprechende Kunststoff-Zusammensetzungen angefertigt. Die einzelnen Komponenten gemäß **Tabelle II** wurden hierzu in einem Zweiwellenextruder (ZSK 25 Compounder der Fa. Coperion Werner & Pfleiderer (Stuttgart, Deutschland)) bei Temperaturen zwischen 270 und 300°C gemischt, als Strang ausgetragen, bis zur Granulierfähigkeit abgekühlt und granuliert. Nach dem Trocknen (in der Regel zwei Tage bei 80°C im Vakuumtrockenschrank) erfolgte die Verarbeitung des Granulats bei Temperaturen im Bereich von 270 bis 290°C zu Normprüfkörpern für die jeweiligen Prüfungen.

Die Flammwidrigkeit der Faser-Matrix-Halbzeuge wurde nach der Methode UL94V (Underwriters Laboratories Inc. Standard of Safety, "Test for Flammability of Plastic Materials for Parts in Devices and Appliances", S. 14 bis S. 18 Northbrook 1998) bestimmt. Die Prüfkörper hatten die Abmessung 125 mm • 13 mm • 0,75 mm.

Die Bruchspannung wurde aus einem Zugversuch in Anlehnung an ISO527-1,-2 an Schulterstäben nach ISO3167, Typ A erhalten, wobei sie an Prüfkörpern jeweils in spritzfrischem Zustand gemessen bzw. ermittelt wurde.

Zur Bestimmung der Bruchspannung nach Heißluftalterung ("Bruchspannung [gealtert]") wurden die Zugstäbe bei 200°C für 45d (1080h) in einen Heißluftofen Binder FP115 der Fa. Binder, Tuttlingen, Deutschland gelagert und nach dem Abkühlen auf Raumtemperatur, wie oben beschrieben, geprüft.

Die Schmelzviskosität wurde in Anlehnung an ISO1133-1 bei einer Temperatur von 270°C und einem Auflagegewicht von 5kg am Granulat bestimmt, wobei zur Beurteilung der Temperaturstabilität der Zusammensetzung jeweils die Werte nach 5 min und nach 20min Verweilzeit bestimmt wurden. Der Quotient aus dem Wert nach 20 min und dem Wert nach 5 min ("Quotient aus MVR") wird dabei wie eingangs beschrieben als Maß für die Temperaturstabilität der Zusammensetzung bei Temperaturen oberhalb des Schmelzpunktes betrachtet. Bei einem Quotient von 1 ist die Schmelzviskosität nach 5 min und nach 20 min unverändert, was für eine hohe thermische Stabilität spricht. Je weiter der Quotient oberhalb von 1 liegt, desto instabiler ist die Zusammensetzung bei diesen Bedingungen.

Die Schlagzähigkeit erhielt man nach Charpy in Anlehnung an ISO179-1 eU an Prüfkörpern der Abmessung 80 mm • 10 mm • 4 mm

In den Versuchen wurden verwendet:

| | |
|---|---|
| Komponente A/1 | Polyamid 66 (Ultramid® A27E der Fa. BASF, Ludwigshafen, Deutschland) |
| Komponente A/2: | Polyamid 6 (Durethan® B26, Fa. Lanxess Deutschland GmbH, Köln, Deutschland) |
| Komponente B/1: | Sekundäres Aluminiumphosphonat hergestellt nach WO 2013/083247 A1, Beispiel 2 |
| Komponente C/1: | Dipentaerythritol [CAS-Nr. 126-58-9] (Di-Penta 93 der Fa. Perstorp Speciality Chemicals AB, Perstorp, Schweden) |
| Komponente D/1: | Aluminium-tris(diethylphosphinat), [CAS-Nr. 225789-38-8] (Exolit® OP1230 der Fa. Clariant SE, Muttenz, Schweiz) |
| Komponente E/1): | Thermostabilisator Irganox® 1098, Fa. BASF, Ludwigshafen, Deutschland |
| Komponente F/1: | Schnittglasfaser CS 7928 der Firma Lanxess Deutschland GmbH, Köln, Deutschland [mittlerer Faserdurchmesser 11 μm, mittlere Faserlänge 4,5 mm, E-Glas] |
| Komponente H/1): | Ethylen-bis-stearylamid [CAS Nr. 110-30-5] als Loxiol® EBS von Emery Oleochemicals |

**Tabelle II**

| Komponente | | Bsp.1 | Vgl. 1 |
|---|---|---|---|
| A/1 | [Gew.-%] | 35,2 | 36,2 |
| A/2 | [Gew.-%] | 15 | 15 |

(fortgesetzt)

| Komponente | | Bsp.1 | Vgl. 1 |
|---|---|---|---|
| B/1 | [Gew.-%] | 6 | 6 |
| C/1 | [Gew.-%] | 1 | |
| D/1 | [Gew.-%] | 12 | 12 |
| E/1 | [Gew.-%] | 0,5 | 0,5 |
| F/1 | [Gew.-%] | 30 | 30 |
| H/1 | [Gew.-%] | 0,3 | 0,3 |
| UL94 | [Class] | V-0 | V-1 |
| Bruchspannung | [MPa] | 138 | 129 |
| Bruchspannung [gealtert] | [MPa] | 110 | 95 |
| Bruchspannung : Beibehaltung nach Alterung | [%] | ***80*** | ***74*** |
| Charpy Schlagzähigkeit | [kJ/m$^2$] | 59 | 57 |
| MVR 270°C/5kg 5min | [cm$^3$/10min] | 27,7 | 23,1 |
| MVR 270°C/5kg 20min | [cm$^3$/10min] | 31,5 | 34,6 |
| Quotient MVR 20min / MVR 5min | | ***1,1*** | ***1,5*** |

Angaben der Komponenten in Gew.-% bezogen auf die Gesamtformmasse.

Das erfindungsgemäße Beispiel in **Tabelle II** zeigt, dass die erfindungsgemäße Kombination mit Komponente C/1 zu einer deutlichen Verbesserung der thermischen Stabilität führte und zwar sowohl bei mehrtägiger Lagerung bei Temperaturen unterhalb des Schmelzpunktes der eingesetzten Polyamide, als auch bei kurzzeitiger Beanspruchung bei Temperaturen oberhalb des Schmelzpunktes der eingesetzten Polyamide. Die Zugabe der Komponente C/1 führte in Kombination mit der Komponente B/1 dabei weder zu einer Abnahme mechanischer Anfangseigenschaften, hier der Bruchspannung, noch zu einer Abnahme der Flammwidrigkeit, wo mit einer UL94 Klassifizierung V-0 in Bsp. 1 gegenüber V-1 in Vgl.1 sogar eine Verbesserung der Flammwidrigkeit erzielt wurde. Hierbei ist hervorzuheben, dass mit dem erfindungsgemäßen Beispiel 1 eine UL94 V-0 Klassifizierung sogar ohne Einsatz von Zinkborat realisiert werden konnte.

## Patentansprüche

**1.** Zusammensetzungen enthaltend

A) Polyamid 6 und/oder Polyamid 66,
B) mindestens ein Aluminiumsalz der Phosphonsäure,
C) mindestens einen mehrwertigen Alkohol mit mindestens 3 Alkoholgruppen und einem Molekulargewicht oberhalb von 200 g/mol,
D) ein oder mehrere organische Phosphinsäuresalze der Formel (I) und/oder ein oder mehrere Diphosphinsäuresalze der Formel (II) und/oder deren Polymere,

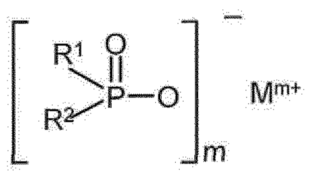 (I) 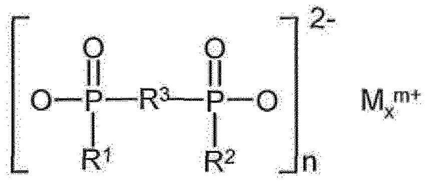 (II)

worin

$R^1$, $R^2$ gleich oder verschieden sind und für ein lineares oder verzweigtes $C_1$-$C_6$-Alkyl, und/oder für $C_6$-$C_{14}$-Aryl stehen,

$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,
M für Aluminium, Zink oder Titan steht,
m für eine ganze Zahl von 1 bis 4 steht;
n für eine ganze Zahl von 1 bis 3 steht,
x für 1 und 2 steht,

wobei n, x und m in Formel (II) gleichzeitig nur solche ganzen Zahlen annehmen können, dass das Diphosphinsäuresalz der Formel (II) als Ganzes ungeladen ist und als Komponente C) Dipentaerythritol oder Tripentaerythritol eingesetzt werden, und auf 100 Massenanteile der Komponente A), 1 bis 40 Massenanteile der Komponente B), 0,1 bis 15 Massenanteile der Komponente C) und 5 bis 150 Massenanteile der Komponente D) eingesetzt werden.

2. Zusammensetzungen gemäß Anspruch 1, **dadurch gekennzeichnet, dass** der Massenanteil der Komponente B) bezogen auf die Summe der Massenanteile von Komponente B) und Komponente D) größer als 10% ist.

3. Zusammensetzungen gemäß der Ansprüche 1 oder 2, **dadurch gekennzeichnet, dass** diese zusätzlich zu den Komponenten A) bis D) noch E) wenigstens einen Thermostabilisator aus der Gruppe der sterisch gehinderten Phenole enthalten.

4. Zusammensetzungen gemäß einem der Ansprüche 1 bis 3, **dadurch gekennzeichnet, dass** diese zusätzlich zu den Komponenten A) bis E) oder anstelle von E) noch F) Glasfasern enthalten.

5. Zusammensetzungen gemäß einem der Ansprüche 1 bis 4, **dadurch gekennzeichnet, dass** diese zusätzlich zu den Komponenten A) bis F) oder anstelle von E) und/oder F) noch G) wenigstens einen von der Komponente E) verschiedenen Füllstoff oder Verstärkungsstoff enthalten.

6. Zusammensetzungen gemäß einem der Ansprüche 1 bis 5, **dadurch gekennzeichnet dass** für Komponente B) mindestens ein Aluminiumsalz der Phosphonsäure ausgewählt aus der Gruppe
primäres Aluminiumphosphonat [$Al(H_2PO_3)_3$],
basisches Aluminiumphosphonat [$Al(OH)H_2PO_3)_2 \cdot 2H_2O$],
$Al_2(HPO_3)_3 \cdot x\ Al_2O_3 \cdot n\ H_2O$ mit x im Bereich von 2,27 bis 1 und n im Bereich von 0 bis 4,

$$Al_2(HPO_3)_3 \cdot (H_2O)_q \qquad (III)$$

mit q im Bereich von 0 bis 4, insbesondere Aluminiumphosphonattetrahydrat [$Al_2(HPO_3)_3 \cdot 4H_2O$] oder sekundäres Aluminiumphosphonat [$Al_2(HPO_3)_3$],

$$Al_2M_z(HPO_3)_y(OH)_v \cdot (H_2O)_w \qquad (IV)$$

worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und

$$Al_2(HPO_3)_u(H_2PO_3)_t \cdot (H_2O)_s \qquad (V)$$

worin u im Bereich von 2 bis 2,99, t im Bereich von 2 bis 0,01 und s im Bereich von 0 bis 4 liegt, wobei in Formel (IV) z, y und v sowie in Formel (V) u und t nur solche Zahlen annehmen können, dass das entsprechende Aluminiumsalz der Phosphonsäure als Ganzes ungeladen ist, eingesetzt wird.

7. Zusammensetzungen gemäß einem der Anspruche 1 bis 5, **dadurch gekennzeichnet, dass** für Komponente B) mindestens ein Aluminiumsalz der Phosphonsäure ausgewählt aus der Gruppe
primäres Aluminiumphosphonat [$Al(H_2PO_3)_3$],
sekundäres Aluminiumphosphonat [$Al_2(HPO_3)_3$],
basisches Aluminiumphosphonat [$Al(OH)H_2PO_3)_2 \cdot 2H_2O$],
Aluminiumphosphonattetrahydrat [$Al_2(HPO_3)_3 \cdot 4H_2O$] und

$$Al_2(HPO_3)_3 \cdot x\ Al_2O_3 \cdot n\ H_2O$$

mit x im Bereich von 2,27 bis 1 und n im Bereich von 0 bis 4 eingesetzt wird.

**8.** Zusammensetzungen gemäß einem der Ansprüche 1 bis 7, **dadurch gekennzeichnet, dass** M in den Formeln (I) oder (II) für Aluminium steht.

**9.** Zusammensetzungen gemäß einem der Ansprüche 1 bis 8, **dadurch gekennzeichnet, dass** $R^1$ und $R^2$ in den Formeln (I) und (II) gleich oder verschieden sind und $C_1$-$C_6$-Alkyl, linear oder verzweigt und/oder Phenyl bedeuten.

**10.** Zusammensetzungen gemäß einem der Ansprüche 1 bis 9, **dadurch gekennzeichnet, dass** $R^3$ in Formel (II) für Methylen, Ethylen, n-Propylen, iso-Propylen, n-Butylen, tert.-Butylen, n-Pentylen, n-Octylen, n-Dodecylen, Phenylen, Naphthylen, Methyl-phenylen, Ethylphenylen, tert.-Butylphenylen, Methylnaphthylen, Ethylnaphthylen, tert.-Butylnaphthylen, Phenylmethylen, Phenylethylen, Phenylpropylen oder Phenylbutylen steht.

**11.** Verfahren zur Verbesserung der Temperaturstabilität PA6 und/oder PA66 basierter Zusammensetzungen und daraus herzustellender Erzeugnisse, **dadurch gekennzeichnet, dass** man
mindestens ein Aluminiumsalz der Phosphonsäure mit
mindestens einem mehrwertigen Alkohol mit mindestens 3 Alkoholgruppen und einem Molekulargewicht oberhalb von 200 g/mol und mit einem oder mehreren organischen Phosphinsäuresalzen der Formel (I) und/oder einem oder mehreren Diphosphinsäuresalzen der Formel (II) und/oder deren Polymere,

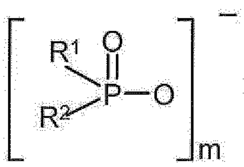 $M^{m+}$ (I) 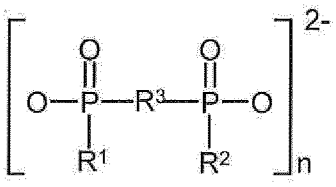 $M_x^{m+}$ (II)

worin

$R^1$, $R^2$ gleich oder verschieden sind und für ein lineares oder verzweigtes $C_1$-$C_6$-Alkyl, und/oder für $C_6$-$C_{14}$-Aryl stehen,
$R^3$ für lineares oder verzweigtes $C_1$-$C_{10}$-Alkylen, $C_6$-$C_{10}$-Arylen oder für $C_1$-$C_3$-Alkyl-$C_6$-$C_{10}$-arylen oder $C_6$-$C_{10}$-Aryl-$C_1$-$C_6$-alkylen steht,
M für Aluminium, Zink oder Titan steht,
m für eine ganze Zahl von 1 bis 4 steht;
n für eine ganze Zahl von 1 bis 3 steht,
x für 1 und 2 steht,

wobei n, x und m in Formel (II) gleichzeitig nur solche ganzen Zahlen annehmen können, dass das Diphosphinsäuresalz der Formel (II) als Ganzes ungeladen ist, in Kombination miteinander einsetzt, und als Komponente C) Dipentaerythritol oder Tripentaerythritol eingesetzt werden, und auf 100 Massenanteile der Komponente A), 1 bis 40 Massenanteile der Komponente B), 0,1 bis 15 Massenanteile der Komponente C) und 5 bis 150 Massenanteile der Komponente D) eingesetzt werden.

**12.** Verfahren gemäß Anspruch 11, **dadurch gekennzeichnet, dass** der Einsatz im Spritzguss einschließlich der Sonderverfahren Gasinjektionstechnik, Wasserinjektionstechnik und Projektilinjektionstechnik, in Extrusionsverfahren, einschließlich in der Profil-Extrusion, oder beim Blasformen erfolgt.

**13.** Verwendung der Zusammensetzungen gemäß einem der Ansprüche 1 bis 10 zur Herstellung von Erzeugnissen, bevorzugt von Elektrobauteilen.

## Claims

**1.** Compositions comprising

A) nylon-6 and/or nylon-6,6,
B) at least one aluminium salt of phosphonic acid,
C) at least one polyhydric alcohol having at least 3 alcohol groups and a molecular weight above 200 g/mol,
D) one or more organic phosphinic salts of the formula (I) and/or one or more diphosphinic salts of the formula (II) and/or polymers thereof,

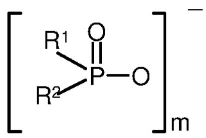 $M^{m+}$ (I) 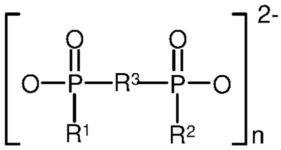 $M_x^{m+}$ (II)

in which

$R^1$, $R^2$ are the same or different and are each a linear or branched $C_1$-$C_6$-alkyl, and/or $C_6$-$C_{14}$-aryl,
$R^3$ is linear or branched $C_1$-$C_{10}$ alkylene, $C_6$-$C_{10}$ arylene or $C_1$-$C_6$ alkyl-$C_6$-$C_{10}$ arylene or $C_6$-$C_{10}$ aryl-$C_1$-$C_6$ alkylene,
M is aluminium, zinc or titanium,
m is an integer from 1 to 4,
n is an integer from 1 to 3,
x is 1 and 2,

where n, x and m in formula (II) may at the same time adopt only such integer values that the diphosphinic salt of the formula (II) as a whole is uncharged, and dipentaerythritol or tripentaerythritol is used as component C), and 1 to 40 parts by mass of component B), 0.1 to 15 parts by mass of component C) and 5 to 150 parts by mass of component D) are used per 100 parts by mass of component A).

2. Compositions according to Claim 1, **characterized in that** the proportion by mass of component B), based on the sum total of the proportions by mass of component B) and component D), is greater than 10%.

3. Compositions according to either of Claims 1 and 2, **characterized in that** they comprise, in addition to components A) to D), also E) at least one thermal stabilizer from the group of the sterically hindered phenols.

4. Compositions according to any of Claims 1 to 3, **characterized in that** they comprise, in addition to components A) to E) or instead of E), also F) glass fibres.

5. Compositions according to any of Claims 1 to 4, **characterized in that** they comprise, in addition to components A) to F) or instead of E) and/or F), also G) at least one filler or reinforcer other than component E).

6. Compositions according to any of Claims 1 to 5, **characterized in that**, for component B), at least one aluminium salt of phosphonic acid selected from the group of
primary aluminium phosphonate $[Al(H_2PO_3)_3]$,
basic aluminium phosphonate $[Al\ (OH)\ H_2PO_3)\ _2 \cdot 2H_2O]$, $Al_2\ (HPO_3)_3 \cdot x\ Al_2O_3 \cdot n\ H_2O$ with x in the range from 2.27 to 1 and n in the range from 0 to 4,

$$Al_2(HPO_3)_3 \cdot (H_2O)_q \qquad (III)$$

with q in the range from 0 to 4, especially aluminium phosphonate tetrahydrate $[Al_2\ (HPO_3)_3 \cdot 4H_2O]$ or secondary aluminium phosphonate $[Al_2(HPO_3)_3]$,

$$Al_2M_z(HPO_3)_y(OH)_v \cdot (H_2O)_w \qquad (IV)$$

in which M denotes alkali metal ion(s) and z is in the range of 0.01 to 1.5, y in the range of 2.63-3.5, v in the range of 0 to 2 and w in the range of 0 to 4, and

$$Al_2(HPO_3)_u(H_2PO_3)_t \cdot (H_2O)_s \qquad (V)$$

in which u is in the range of 2 to 2.99, t in the range of 2 to 0.01 and s in the range of 0 to 4, where z, y and v in

formula (IV) and u and t in formula (V) may only assume such values that the corresponding aluminium salt of the phosphonic acid as a whole is uncharged, is used.

7. Compositions according to any of Claims 1 to 5, **characterized in that**, for component B), at least one aluminium salt of phosphonic acid selected from the group of primary aluminium phosphonate $[Al(H_2PO_3)_3]$, secondary aluminium phosphonate $[Al_2(HPO_3)_3]$, basic aluminium phosphonate $[Al(OH)H_2PO_3)_2 \cdot 2H_2O]$, aluminium phosphonate tetrahydrate $[Al_2(HPO_3)_3 \cdot 4H_2O]$ and

$$Al_2(HPO_3)_3 \cdot x\ Al_2O_3 \cdot n\ H_2O$$

with x in the range of 2.27 to 1 and n in the range of 0 to 4, is used.

8. Compositions according to any of Claims 1 to 7, **characterized in that** M in the formulae (I) or (II) is aluminium.

9. Compositions according to any of Claims 1 to 8, **characterized in that** $R^1$ and $R^2$ in the formulae (I) and (II) are the same or different and are each $C_1$-$C_6$ alkyl, linear or branched, and/or phenyl.

10. Compositions according to any of Claims 1 to 9, **characterized in that** $R^3$ in formula (II) is methylene, ethylene, n-propylene, isopropylene, n-butylene, tert-butylene, n-pentylene, n-octylene, n-dodecylene, phenylene, naphthylene, methylphenylene, ethylphenylene, tert-butylphenylene, methylnaphthylene, ethylnaphthylene, tert-butylnaphthylene, phenylmethylene, phenylethylene, phenylpropylene or phenylbutylene.

11. Method for improving the thermal stability of PA6- and/or PA66-based compositions and products producible therefrom, **characterized in that** at least one aluminium salt of phosphonic acid is used in combination with at least one polyhydric alcohol having at least 3 alcohol groups and a molecular weight above 200 g/mol and with one or more organic phosphinic salts of the formula (I) and/or one or more diphosphinic salts of the formula (II) and/or polymers thereof,

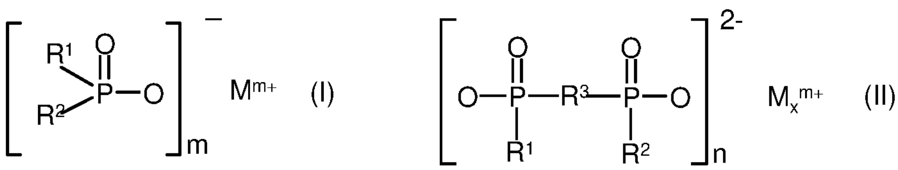

in which

$R^1$, $R^2$ are the same or different and are each a linear or branched $C_1$-$C_6$-alkyl, and/or $C_6$-$C_{14}$-aryl,
$R^3$ is linear or branched $C_1$-$C_{10}$-alkylene, $C_6$-$C_{10}$-arylene or $C_1$-$C_6$-alkyl-$C_6$-$C_{10}$- arylene or $C_6$-$C_{10}$-aryl-$C_1$-$C_6$-alkylene,
M is aluminium, zinc or titanium,
m is an integer from 1 to 4,
n is an integer from 1 to 3,
x is 1 and 2,

where n, x and m in formula (II) may at the same time adopt only such integer values that the diphosphinic salt of the formula (II) as a whole is uncharged, and dipentaerythritol or tripentaerythritol is used as component C), and 1 to 40 parts by mass of component B), 0.1 to 15 parts by mass of component C) and 5 to 150 parts by mass of component D) are used per 100 parts by mass of component A).

12. Method according to Claim 11, **characterized in that** the compositions are used in injection moulding, including the special methods of gas injection methodology, water injection methodology and projectile injection methodology, in extrusion processes, including in profile extrusion, or in blow-moulding.

13. Use of the compositions according to any of Claims 1 to 10 for producing products, preferably electrical components.

## Revendications

**1.** Compositions contenant

A) un polyamide 6 et/ou un polyamide 66,
B) au moins un sel d'aluminium de l'acide phosphonique,
C) au moins un alcool polyvalent comportant au moins 3 groupes alcool et un poids moléculaire supérieur à 200 g/mole,
D) un ou plusieurs sels d'acide phosphinique organiques de formule (I) et/ou un ou plusieurs sels d'acide diphosphinique de formule (II) et/ou leurs polymères,

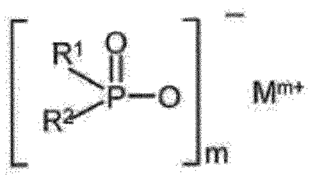 (I) 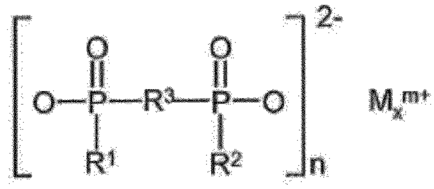 (II)

dans lesquelles

$R^1$, $R^2$ sont identiques ou différents et représentent $C_{1-6}$-alkyle linéaire ou ramifié et/ou $C_{6-14}$-aryle,
$R^3$ représente $C_{1-10}$-alkylène linéaire ou ramifié, $C_{6-10}$-arylène ou $C_{1-6}$-alkyl-$C_{6-10}$-arylène ou $C_{6-10}$-aryl-$C_{1-6}$-alkylène,
M représente aluminium, zinc ou titane,
m représente un nombre entier de 1 à 4 ;
n représente un nombre entier de 1 à 3,
x représente 1 et 2,
n, x et m dans la formule (II) ne pouvant valoir simultanément seulement de tels nombres entiers que le sel d'acide diphosphinique de formule (II) dans son ensemble est non chargé et en tant que composant C) le dipentaérythritol ou le tripentaérythritol étant utilisés, et pour 100 parties en masse du composant A), 1 à 40 parties en masse du composant B), 0,1 à 15 parties en masse du composant C) et 5 à 150 parties en masse du composant D) étant utilisées.

**2.** Compositions selon la revendication 1, **caractérisées en ce que** la partie en masse du composant B) par rapport à la somme des parties en masse du composant B) et du composant D) est supérieure à 10 %.

**3.** Compositions selon la revendication 1 ou 2, **caractérisées en ce que** celles-ci contiennent en plus des composants A) à D), également E) au moins un thermostabilisateur du groupe des phénols stériquement encombrés.

**4.** Compositions selon l'une quelconque des revendications 1 à 3, **caractérisées en ce que** celles-ci contiennent en plus des composants A) à E) ou à la place de E) également F) des fibres de verre.

**5.** Compositions selon l'une quelconque des revendications 1 à 4, **caractérisées en ce que** celles-ci contiennent en plus des composants A) à F) ou à la place de E) et/ou de F) également G) au moins une charge ou une charge de renforcement différente du composant E).

**6.** Compositions selon l'une quelconque des revendications 1 à 5, **caractérisées en ce que** pour le composant B) au moins un sel d'aluminium de l'acide phosphonique choisi dans le groupe phosphonate d'aluminium primaire [$Al(H_2PO_3)_3$], phosphonate d'aluminium basique [$Al(OH)H_2PO_3)_2 \cdot 2H_2O$], $Al_2(HPO_3)_3 \cdot x\ Al_2O_3 \cdot n\ H_2O$ avec x dans la plage de 2,27 à 1 et n dans la plage de 0 à 4,

$$Al_2(HPO_3)_3 \cdot (H_2O)_q \qquad (III)$$

avec q dans la plage de 0 à 4, en particulier le tétrahydrate de phosphonate d'aluminium [$Al_2(HPO_3)_3 \cdot 4H_2O$] ou le phosphonate d'aluminium secondaire [$Al_2(HPO_3)_3$],

$$Al_2M_z(HPO_3)_y(OH)_v \cdot (H_2O)_w \qquad (IV)$$

dans laquelle M signifie un ou plusieurs ions de métal alcalin et z se situe dans la plage de 0,01 à 1,5, y se situe dans la plage de 2,63 à 3,5, v se situe dans la plage de 0 à 2 et w se situe dans la plage de 0 à 4, et

$$Al_2(HPO_3)_u(H_2PO_3)_t \cdot (H_2O)_s \qquad (V)$$

dans laquelle u se situe dans la plage de 2 à 2,99, t se situe dans la plage de 2 à 0,01 et s se situe dans la plage de 0 à 4, où dans la formule (IV) z, y et v ainsi que dans la formule (V) u et t ne peuvent seulement valoir de tels nombres que le sel d'aluminium correspondant de l'acide phosphonique dans son ensemble est non chargé, est utilisé.

**7.** Compositions selon l'une quelconque des revendications 1 à 5, **caractérisées en ce que** pour le composant B) au moins un sel d'aluminium de l'acide phosphonique choisi dans le groupe phosphonate d'aluminium primaire $[Al(H_2PO_3)_3]$, phosphonate d'aluminium secondaire $[Al_2(HPO_3)_3]$, phosphonate d'aluminium basique $[Al(OH)H_2PO_3)_2 \cdot 2H_2O]$,
tétrahydrate de phosphonate d'aluminium $[Al_2(HPO_3)_3 \cdot 4H_2O]$ et

$$Al_2(HPO_3)_3 \cdot x\ Al_2O_3 \cdot n\ H_2O$$

avec x dans la plage de 2,27 à 1 et n dans la plage de 0 à 4, est utilisé.

**8.** Compositions selon l'une quelconque des revendications 1 à 7, **caractérisées en ce que** M représente aluminium dans les formules (I) ou (II) .

**9.** Compositions selon l'une quelconque des revendications 1 à 8, **caractérisées en ce que** $R^1$ et $R^2$ dans les formules (I) et (II) sont identiques ou différents et signifient $C_{1-6}$-alkyle, linéaire ou ramifié et/ou phényle.

**10.** Compositions selon l'une quelconque des revendications 1 à 9, **caractérisées en ce que** $R^3$ dans la formule (II) représente méthylène, éthylène, n-propylène, iso-propylène, n-butylène, tert-butylène, n-pentylène, n-octylène, n-dodécylène, phénylène, naphtylène, méthyl-phénylène, éthylphenylène, tert-butylphénylène, méthylnaphtylène, éthylnaphtylène, tert-butylnaphtylène, phénylméthylène, phényléthylène, phénylpropylène ou phénylbutylène.

**11.** Procédé pour l'amélioration de la stabilité en température de compositions à base de PA6 et/ou de PA66 et produits à fabriquer à partir de celles-ci, **caractérisé en ce qu'**on utilise en combinaison les uns avec les autres
au moins un sel d'aluminium de l'acide phosphonique avec
au moins un alcool polyvalent comportant au moins 3 groupes alcool et un poids moléculaire supérieur à 200 g/mole et avec un ou plusieurs sels d'acide phosphinique organiques de formule (I) et/ou un ou plusieurs sels d'acide diphosphinique de formule (II) et/ou leurs polymères,

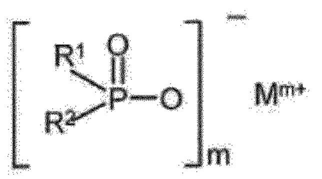
(I)

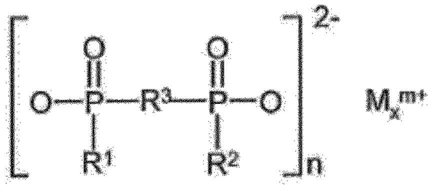
(II)

dans lesquelles

$R^1$, $R^2$ sont identiques ou différents et représentent $C_{1-6}$-alkyle linéaire ou ramifié et/ou $C_{6-14}$-aryle,
$R^3$ représente $C_{1-10}$-alkylène linéaire ou ramifié, $C_{6-10}$-arylène ou $C_{1-6}$-alkyl-$C_{6-10}$-arylène ou $C_{6-10}$-aryl-$C_{1-6}$-alkylène,
M représente aluminium, zinc ou titane,
m représente un nombre entier de 1 à 4 ;
n représente un nombre entier de 1 à 3,
x représente 1 et 2,
n, x et m dans la formule (II) ne pouvant valoir simultanément seulement de tels nombres entiers que le sel d'acide diphosphinique de formule (II) dans son ensemble est non chargé, et en tant que composant C) le

dipentaérythritol ou le tripentaérythritol étant utilisés, et pour 100 parties en masse du composant A), 1 à 40 parties en masse du composant B), 0,1 à 15 parties en masse du composant C) et 5 à 150 parties en masse du composant D) étant utilisées.

**12.** Procédé selon la revendication 11, **caractérisé en ce que** l'utilisation est réalisée dans un moulage par injection y compris le procédé particulier de technique par injection de gaz, de technique par injection d'eau et de technique par injection de projectiles, dans un procédé d'extrusion, y compris dans l'extrusion de profilé, ou dans le moulage par soufflage.

**13.** Utilisation des compositions selon l'une quelconque des revendications 1 à 10 pour la fabrication de produits, préférablement de composants électriques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0792912 A2
- WO 2006029711 A1
- US 2705227 A
- US 20130217814 A1
- WO 2014135256 A1
- WO 2013033287 A2
- WO 2012140100 A1
- EP 1624015 A1
- DE 102004019716 A1
- DE 102011084519 A1
- WO 2013083247 A1
- WO 9739053 A
- DE 2702661 A
- US 4360617 A
- DE 2035390 A
- US 3644574 A
- DE 2248242 A
- GB 1409275 A
- US 4937285 A
- DE 3704657 A
- US 4859740 A
- DE 3704655 A
- US 4861831 A
- DE 3631540 A
- US 4806593 A
- DE 3631539 A
- US 4812515 A
- DE 4236122 A
- WO 2009003976 A1


### In der Beschreibung aufgeführte Nicht-Patentliteratur


- **J.B. DAHIYA.** *Polymer Degredation and Stability,* 18. Mai 2012, vol. 97 (8), 1458-1465
- **H. DOMININGHAUS.** Die Kunststoffe und ihre Eigenschaften. VDI-Verlag, 1976, 272
- *Die Kunststoffe und ihre Eigenschaften,* 1998, 14
- **A. F. HOLLEMAN ; E. WIBERG.** Lehrbuch der Anorganischen Chemie. Walter de Gruyter, 1995, 764
- *CHEMICAL ABSTRACTS,* 71449-76-8
- *CHEMICAL ABSTRACTS,* 156024-71-4
- *CHEMICAL ABSTRACTS,* 225789-38-8
- *CHEMICAL ABSTRACTS,* 36443-68-2
- *CHEMICAL ABSTRACTS,* 35074-77-2
- *CHEMICAL ABSTRACTS,* 23128-74-7
- Bedeutung sei auf Chemie Ingenieur Technik. Wiley-VCH Verlags GmbH, 2000, vol. 72, 273-276
- **CHRIS DEARMITT.** Additives Feature, Mineral Fillers. *COMPOUNDING WORLD,* Februar 2011, 28-38, www.compoundingworld.com
- Ullmann, Enzyklopädie der Technischen Chemie. 1980, vol. 19, 280
- *CHEMICAL ABSTRACTS,* 1078142-02-5
- *CHEMICAL ABSTRACTS,* 1592-23-0
- *CHEMICAL ABSTRACTS,* 110-30-5
- Diese sind dem Fachmann aus Technische Thermoplaste 4. Polyamide. Carl Hanser Verlag, 1998, 311-314
- **K. BRAST.** Verarbeitung von Langfaser-verstärkten Thermoplasten im direkten Plastifizier-/Pressverfahren. *Rheinisch-Westfälische Technische Hochschule Aachen,* 2001, 30-33
- Kunststoff-Handbuch 3/4, Polyamide. Carl Hanser Verlag, 1998, 374-384
- **THIELEN ; HARTWIG ; GUST.** Blasformen von Kunststoffhohlkörpern. Carl Hanser Verlag, 2006, 15-17
- **THIELEN ; HARTWIG ; GUST.** Blasformen von Kunststoffhohlkörpern. Carl Hanser Verlag, 2006, 117-122
- **THIELEN ; HARTWIG ; GUST.** Blasformen von Kunststoffhohlkörpern. Carl Hanser Verlag, 2006, 123
- Test for Flammability of Plastic Materials for Parts in Devices and Appliances. Underwriters Laboratories Inc, 1998, 14-18
- *CHEMICAL ABSTRACTS,* 126-58-9